(19) Europäisches Patentamt
European Patent Office
Office européen des brevets

(11) EP 4 089 591 A2

(12) EUROPEAN PATENT APPLICATION

(43) Date of publication:
**16.11.2022 Bulletin 2022/46**

(21) Application number: **22152892.0**

(22) Date of filing: **24.01.2022**

(51) International Patent Classification (IPC):
***G06N 5/00*** (2006.01) ***G06N 7/00*** (2006.01)

(52) Cooperative Patent Classification (CPC):
**G06N 5/003; G06N 7/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.05.2021 JP 2021080535**

(71) Applicant: **FUJITSU LIMITED**
**Kawasaki-shi, Kanagawa 211-8588 (JP)**

(72) Inventor: **Dote, Aki**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

# (54) PROGRAM AND INFORMATION PROCESSING APPARATUS

(57) A program in which a computer executes performs processing of executing search processing that repeatedly execute selecting, determining, and state changing according to the predetermined order for searching for a solution to a problem represented by an energy function including a plurality of state variables. The search processing includes counting a number of times it is determined that the value of the state variable of the change candidate is not to be continuously changed in the search processing, and correcting, with an offset, the change amount of the energy function corresponding to the change in the value of the state variable of the change candidate when the number of times counted in the count processing reaches a predetermined number. The determining includes determining, after the change amount is corrected, whether to change the value of the state variable of the change candidate based on the corrected change amount is performed.

FIG. 1

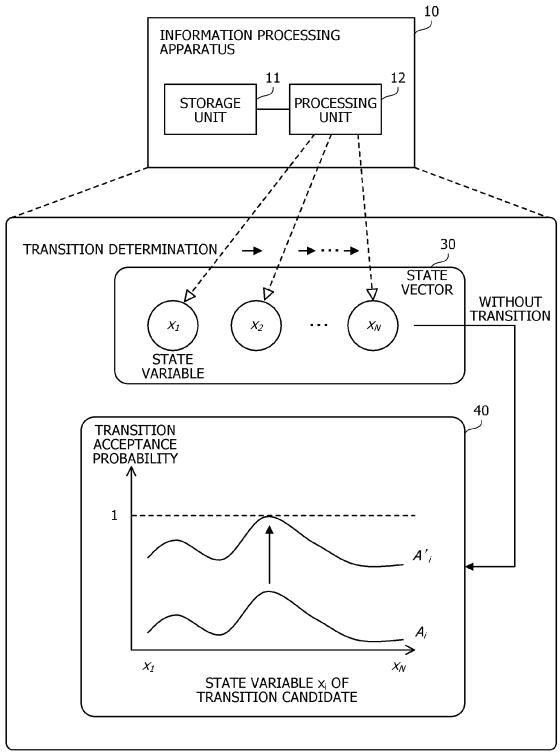


EP 4 089 591 A2

## Description

[Field]

Embodiments discussed herein are related to a program, an information processing method, and an information processing apparatus.

[Background Art]

An information processing apparatus may be used for obtaining a solution to a combinatorial optimization problem. The information processing apparatus converts the combinatorial optimization problem into an energy function of an Ising model that is a model representing a spin behavior of a magnetic body, and searches for a combination that minimizes or maximizes the energy function among combinations of values of state variables included in the energy function. A combination of values of state variables, which minimizes or maximizes the energy function, corresponds to a ground state or an optimum solution expressed by a set of state variables. As a method for acquiring an approximate solution of a combinatorial optimization problem in a practical time, a method in which a simulated annealing (SA) method, a parallel tempering method, and the like are used in combination based on a Markov-chain Monte Carlo (MCMC) method is applied.

For example, as an apparatus that executes the MCMC method, there are an apparatus that selects a state variable according to an index order (sequentially) and determines whether or not to allow a state transition in which a value of the state variable is to be changed, and an apparatus that performs parallel search for selecting a single state transition by simultaneously setting a plurality of state transitions as transition candidates.

[Citation List]

[Patent Literature]

[PTL 1] Japanese Laid-open Patent Publication No. 2020-135727.
[PTL 2] U.S. Patent Application Publication No. 2014/0279816.

[Summary]

[Problem]

As described above, for obtaining a solution to a problem represented by an energy function, it is considered to select a state variable in a predetermined order such as an index of the state variable and determine whether or not to allow a state transition related to the state variable. According to this method, determination for each of a plurality of state variables is repeatedly performed until a state transition is performed, for example, in such a manner that determination of the next one round is started in a case where one round of the state variables is completed, and any of the state transitions are not allowed. However, as the number of iterations increases while the state transition is not performed, a time taken to obtain a solution increases.

In one aspect, an object of the present embodiments is to provide a program for improving the efficiency of solution search, an information processing method, and an information processing apparatus.

[Solution to Problem]

In one embodiment, a program in which a computer executes performs processing of: executing search processing that repeatedly execute selection processing, determination processing, and state change processing according to the predetermined order for searching for a solution to a problem represented by an energy function including a plurality of state variables. The selection processing includes selecting a state variable of a change candidate, which is a part of the plurality of state variables, in a predetermined order. The determination processing includes determining whether or not to change a value of the state variable of the change candidate based on a change amount of a value of the energy function corresponding to a change in the value of the state variable of the change candidate selected in the selection processing. The state change processing includes changing the value of the state variable of the change candidate when it is determined in the determination processing that the value of the state variable of the change candidate is to be changed. The search processing further includes: counting processing that incudes counting a number of times it is determined that the value of the state variable of the change candidate is not to be continuously changed in the search processing repeatedly executed, and correction processing that includes correcting, with an offset value, the change amount of the energy function corresponding to the change in the value of the state variable of the change candidate newly selected when the number of times counted in the count processing reaches a predetermined number of times. The determination processing includes determining, after the change amount is corrected through the correction processing, whether or not to change the value of the state variable of the change candidate newly selected based on the corrected change amount is performed.

Further, in one embodiment, a program in which a computer executes performs processing of: executing search processing that repeatedly execute selection processing, determination processing, and state change processing according to the predetermined order for searching for a solution to a problem represented by an energy function including a plurality of state variables. The selection processing includes selecting a state variable of a change candidate, which is a part of the plurality of state variables, in a predetermined order. The determination processing includes determining whether or not to change a value of the state variable of the change candidate based on a change amount of a value of the energy function corresponding to a change in the value of the state variable of the change candidate selected in the selection processing. The state change processing includes changing the value of the state variable of the change candidate when it is determined in the determination processing that the value of the state variable of the change candidate is to be changed. The search processing further includes: counting processing that incudes counting a number of times it is determined that the value of the state variable of the change candidate is not to be continuously changed in the search processing repeatedly executed, selecting a first state variable from the plurality of state variables based on a probability key that is calculated according to the change amount and random number value when the number of times counted in the count processing reaches a predetermined number of times, and changing a value of the selected first value.

Further, in one embodiment, an information processing method is provided.

Further, in one embodiment, an information processing apparatus is provided.

[Effects of Invention]

According to one aspect, the efficiency of the solution search may be improved.

[Brief Description of Drawings]

FIG. 1 is a diagram illustrating an information processing apparatus according to a first embodiment;
FIG. 2 is a diagram illustrating an information processing apparatus according to a second embodiment;
FIG. 3 is a diagram illustrating a hardware example of an information processing apparatus according to a third embodiment;
FIG. 4 is a diagram illustrating a function example of the information processing apparatus;
FIG. 5 is a diagram illustrating a function example of a replica update unit;
FIG. 6 is a flowchart illustrating a processing example of the information processing apparatus;
FIG. 7 is a diagram illustrating exemplary solution results (part 1);
FIG. 8 is a diagram illustrating exemplary solution results (part 2);
FIG. 9 is a diagram illustrating a function example of a replica update unit according to a fourth embodiment;
FIG. 10 is a flowchart illustrating a processing example of the information processing apparatus;
FIG. 11 is a flowchart illustrating a comparative example; and
FIG. 12 is a diagram illustrating a function example of the information processing apparatus according to a fifth embodiment.

[Description of Embodiments]

Hereinafter, the present embodiments will be described with reference to the drawings.

[First Embodiment]

A first embodiment will be described.

FIG. 1 is a diagram illustrating an information processing apparatus according to the first embodiment.

An information processing apparatus 10 searches for a solution to a combinatorial optimization problem by using the MCMC method, and outputs the searched solution. The information processing apparatus 10 includes a storage unit 11 and a processing unit 12. The storage unit 11 may be a volatile storage device such as a random-access memory (RAM), and may be a non-volatile storage device such as a hard disk drive (HDD) or a flash memory. The processing unit 12 may include a central processing unit (CPU), a digital signal processor (DSP), an application-specific integrated circuit (ASIC), a field-programmable gate array (FPGA), a graphics processing unit (GPU), and the like. The processing unit 12 may be a processor that executes a program. The "processor" may include a set of multiple processors (multiprocessor).

The combinatorial optimization problem is formulated by an Ising-type energy function and is replaced with, for example, a problem that minimizes a value of an energy function. The energy function may also be referred to as an objective function, an evaluation function, or the like. The energy function includes a plurality of state variables. Each of the state variables is a binary variable having a value of 0 or 1, and may be referred to as a "bit". A solution of the combinatorial optimization problem is represented by values of the plurality of state variables. The solution that minimizes the value of the energy function represents a ground state of an Ising model, and corresponds to an optimum solution of the combinatorial optimization problem. The value of the energy function may be referred to as energy.

The Ising-type energy function is represented by Equation (1).

[Equation 1]

$$E(\boldsymbol{x}) = -\sum_{\langle i,j \rangle} W_{ij} x_i x_j - \sum_i b_i x_i \qquad (1)$$

A state vector x has a plurality of state variables as elements, and represents a state of the Ising model. Equation (1) is an energy function formulated in a quadratic unconstrained binary optimization (QUBO) form. In a case of a problem of maximizing energy, the sign of the energy function may be reversed. Values of the plurality of state variables belonging to the state vector x are stored in the storage unit 11.

A first term on the right side of Equation (1) is obtained by integrating a product of values of two state variables and a weight coefficient without omission and duplication for all combinations of two state variables that are selectable from all state variables. Subscripts i and j are indices of state variables. $x_i$ is an i-th state variable. $x_j$ is a j-th state variable. $W_{ij}$ is a weight between the i-th state variable and the j-th state variable or a weight coefficient indicating a strength of coupling. $W_{ij} = W_{ji}$, and $W_{ii}$ is 0.

A second term on the right side of Equation (1) is a sum of products of each of the values of the state variables and biases of all the state variables. $b_i$ indicates a bias for the i-th state variable.

When a value of the state variable $x_i$ is changed to become $1 - x_i$, the increase amount of the state variable $x_i$ is represented as $\delta x_i = (1 - x_i) - x_i = 1 - 2x_i$. Therefore, a change amount $\Delta E_i$ of energy accompanying the change in the state variable $x_i$ for the energy function E(x) is represented by Equation (2).

[Equation 2]

$$\begin{aligned} \Delta E_i &= E(\boldsymbol{x})\Big|_{x_i \to 1 - x_i} - E(\boldsymbol{x}) \\ &= -\delta x_i \left( \sum_j W_{ij} x_j + b_i \right) \end{aligned} \qquad (2)$$

In searching for a solution, the processing unit 12 uses the Metropolis criterion or the Gibbs criterion in order to determine whether or not to allow a state transition in which the change amount of energy is $\Delta E_i$, for example, a change in the value of the state variable $x_i$. The processing unit 12 stochastically allows not only a transition to a state where energy is lowered but also a transition to a state where energy is increased in a neighbor search for searching for a transition from a certain state to another state where energy is lower than the certain state. For example, a probability of accepting the state transition of the change amount $\Delta E_i$ of energy, for example, a transition acceptance probability $A_i$ is represented by Equation (3).

[Equation 3]

$$A_i = \begin{cases} \min\left[1, \exp\left(-\beta \cdot \Delta E_i\right)\right] & \text{Metropolis} \\ 1/\left[1 + \exp\left(\beta \cdot \Delta E_i\right)\right] & \text{Gibbs} \end{cases} \quad (3)$$

$\beta$ is a reciprocal ($\beta = 1/T$) of a temperature value T ($T > 0$), and is referred to as an inverse temperature. A min operator indicates a minimum value of arguments. The right upper side of Equation (3) corresponds to the Metropolis criterion, and the right lower side of Equation (3) corresponds to the Gibbs criterion. The processing unit 12 compares a uniform random number u satisfying $0 < u < 1$ with $A_i$, and when $u < A_i$, the processing unit 12 accepts a change in the value of the state variable $x_i$ and changes the value of the state variable $x_i$. Unless $u < A_i$, the processing unit 12 does not accept the change in the value of the state variable $x_i$ and does not change the value of the state variable $x_i$. According to Equation (3), as $\Delta E_i$ is a larger value, $A_i$ is smaller. As $\beta$ is smaller, for example, T is lager, a state transition in which $\Delta E_i$ is larger is more likely to be allowed. For example, the processing unit 12 may use an SA method, a parallel tempering (PT), a population annealing (PA), or the like, which is a type of the MCMC method, to search for a solution. The PT method is also referred to as an exchange Monte Carlo or a replica exchange method.

The processing unit 12 selects a state variable of a change candidate, which is a part of the plurality of state variables, in a predetermined order, for example, sequentially. As an example, the processing unit 12 selects one state variable of a change candidate. The state variable $x_i$ of the selected change candidate is the next state variable subjected to transition determination. Information indicating the predetermined order is set in the storage unit 11 in advance. For example, the predetermined order may be an order of indices i. Assuming that the number of all state variables is N, the order of each index i is i = 1, 2, $\cdots$, N - 1, N, 1, 2, $\cdots$, N, 1, 2, and $\cdots$. Alternatively, the predetermined order may be a random permutation $\Pi_1$, $\Pi_2$, $\cdots$, $\Pi_N$, $\Pi_1$, $\Pi_2$, and $\cdots$. Here, $\{\Pi_i\}$ is a permutation of $\{1, \cdots, N\}$. As will be described later, the processing unit 12 may select two or more state variables of the change candidates at a time.

As described above, the processing unit 12 determines whether or not to change the value of the state variable $x_i$ based on the change amount $\Delta E_i$ of energy in a case where the value of the selected state variable $x_i$ is changed. When it is determined that the value is to be changed, the processing unit 12 changes the value of the state variable $x_i$ and selects the next state variable to be determined in accordance with the above-described predetermined order.

By contrast, when it is determined that the value of the state variable $x_i$ is not to be changed, the processing unit 12 selects the next state variable to be determined without changing the value of the state variable $x_i$. The processing unit 12 records, in the storage unit 11, the number of times that the value of the state variable is not to be changed continuously.

When the number of times it is continuously determined that the value of the state variable is not to be changed reaches a predetermined number of times, the processing unit 12 corrects the change amount of energy with an offset value and determines whether or not to change the value of the selected state variable based on the corrected change amount of energy.

For example, the processing unit 12 corrects $\Delta E_i$ included in the transition acceptance probability $A_i$ with an offset value $E_{off}$ ($E_{off} > 0$) to obtain a corrected transition acceptance probability $A'_i$. For example, $A'_i$ is $A_i(\Delta E_i - E_{off})$. When the Metropolis criterion is used, the transition acceptance probability $A'_i$ is represented by Equation (4).

[Equation 4]

$$A'_i = \min\left[1, \exp\left(-\beta\left(\Delta E_i - E_{off}\right)\right)\right] \quad (4)$$

Since the inverse temperature $\beta$ and the offset value $E_{off}$ are positive, the transition acceptance probability $A'_i = A(\Delta E_i - E_{off})$ is a probability obtained by multiplying the original transition acceptance probability $A_i = A(\Delta E_i)$ by a coefficient $\exp(\beta \cdot E_{off})$ equal to or larger than 1. Therefore, in a case where the transition acceptance probability $A'_i = A(\Delta E_i - E_{off})$ is used, a ratio between the transition acceptance probabilities of the respective state transitions is not changed as compared with a case where the original transition acceptance probability $A_i = A(\Delta E_i)$ is used.

Instead of $A_i$, the processing unit 12 compares $A'_i$ with the uniform random number u, and determines whether or not to accept a change in the value of the state variable $x_i$. For example, when $u < A'_i$, the processing unit 12 accepts a change in the value of the state variable $x_i$ and changes the value of the state variable $x_i$. Unless $u < A'_i$, the processing unit 12 does not accept the change in the value of the state variable $x_i$ and does not change the value of the state variable $x_i$. Since the transition acceptance probability for each state variable is improved, the state transition is likely to occur.

After changing a value of any state variable in accordance with the determination based on the transition acceptance probability $A'_i$, the processing unit 12 resets $E_{off}$ to 0 to set the correction amount to 0, for example, cancels the correction with the offset value. Thereafter, $A_i$ is used as the transition acceptance probability for the state variable of the transition candidate to be newly selected. The processing unit 12 then selects the next state variable to be determined, and newly starts counting the number of times it is determined that the value of the state variable is not to be continuously changed, from 0. After the state transition related to the state variable $x_i$ based on the transition acceptance probability $A'_i$ is accepted, the next state variable to be determined may be the state variable next to the state variable $x_i$ selected in accordance with the above-described predetermined order or may be the first state variable in the order.

For example, when the number of times it is continuously determined that the value of the state variable is not to be changed reaches the number Z of times of determination of one round, the processing unit 12 may correct the change amount of energy with the offset value. When the number of the state variables of the change candidates selected at a time is one, the number Z of times of determination of one round may be Z = N.

FIG. 1 illustrates a processing example by the information processing apparatus 10. For example, a state vector 30 includes state variables $x_1$, $x_2$, ···, and $x_N$. The number Z of times of determination of one round is set to N. The processing unit 12 sequentially selects $x_1$, $x_2$, ···, and $x_N$ one by one, and determines whether or not to accept the state transition. When the number of times it is continuously determined that the value of the state variable is not to be changed reaches Z = N, the processing unit 12 determines whether or not to accept the state transition related to the state variable $x_i$ by using the transition acceptance probability $A'_i$ obtained by correcting $\Delta E_i$ with the offset value $E_{off}$. A graph 40 is an example in which transition acceptance probabilities $A_i$ and $A'_i$ in a case where a value of any state variable is changed for a certain state are plotted for each state variable. As illustrated in the graph 40, by correcting $\Delta E_i$ with the offset value $E_{off}$, it is possible to increase the transition acceptance probability as compared with the case where $\Delta E_i$ is not corrected.

The processing unit 12 may set $E_{off} = E_{off}^*$. $E_{off}^*$ is represented by Equation (5).

[Equation 5]

$$E_{off}^* = \min_i \{\max(0, \Delta E_i)\} \tag{5}$$

A max operator indicates a maximum value of the arguments. By setting $E_{off} = E_{off}^*$, it is possible to set the transition acceptance probability $A'_m$ to $A'_m = 1$, in which the transition acceptance probability $A'_m$ corresponds to the minimum value $\Delta E_m$ of $\Delta E_i$ for all indices i in a case where the state transition does not occur. For example, the processing unit 12 may reliably accept the state transition at least for $x_m$. For example, the processing unit 12 may obtain $E_{off}^*$ by storing, in the storage unit 11, the minimum value of the change amount of energy obtained while it is continuously determined that the value of the state variable is not to be changed.

The processing unit 12 may set the number of the state variables of the change candidates selected at a time to two or more, and may simultaneously change the values of the state variables of the two or more change candidates for one transition determination. The processing unit 12 may calculate $\Delta E$ in a case where the values of two or more state variables are changed, from the change amount of energy based on Equation (2) for each of the two or more state variables.

For example, a sequence for selecting two state variables may be an order represented by (1, 2), (1, 3), ···, (1, N), (2, 3), (2, 4), ···, (2, N), ···, and (N - 1, N) by using a set of indices. In this case, the number Z of times of determination of one round is Z = (N - 1) + (N - 2) + ··· + 1 = {N(N - 1)}/2.

Alternatively, a sequence for selecting the two state variables may be an order represented by $(\Pi_1, \Pi_2)$, $(\Pi_1, \Pi_3)$, ···, and $(\Pi_{N-1}, \Pi_N)$. Here, $\{\Pi_i\}$ is a permutation of {1, ···, N}. In any case, the same set of the state variables is not selected two or more times in one round, for example, there is no duplication between the sets of the state variables selected in one round.

The processing unit 12 may perform a search in which the number of the state variables of the change candidates selected at a time is one, and then perform a search in which the number of the state variables of the change candidates selected at a time is two. The processing unit 12 may select the state variable to be determined in an order in consideration of a constraint that only one of the state variables belonging to a predetermined group is set to 1.

According to the information processing apparatus 10, search processing for searching for a solution of a problem represented by the energy function including the plurality of state variables is executed. The search processing includes selection processing, determination processing, and state change processing. In the selection processing, the processing unit 12 selects a state variable of a change candidate, which is a part of the plurality of state variables, in a predetermined order. In the determination processing, the processing unit 12 determines whether or not to change a value of the state variable of the change candidate based on the change amount of a value of the energy function corresponding to a change in the value of the state variable of the change candidate selected in the selection processing. In the state change processing, when it is determined in the determination processing that the value of the state variable of the change candidate is to be changed, the processing unit 12 changes the value of the state variable of the change candidate. In the search processing, the processing unit 12 repeatedly executes the selection processing, the determination processing, and the state change processing according to a predetermined order. In the search processing, the processing unit 12 further executes count processing and correction processing. In the count processing, the processing unit 12 counts the number of times it is determined that the value of the state variable of the change candidate is not to be continuously changed during the search processing being repeatedly executed. In the correction processing, when the number of times counted in the count processing reaches a predetermined number of times, the processing unit 12 corrects, with an offset value, the change amount of the energy function corresponding to the change in the value of the state variable of the change candidate newly selected. In the determination processing after the change amount is corrected through the correction processing, the processing unit 12 determines whether or not to change the value of the state variable of the change candidate newly selected based on the corrected change amount.

Accordingly, the information processing apparatus 10 may improve the efficiency of the solution search.

For obtaining a solution to a problem represented by the energy function, it is considered to sequentially select the state variable as described above and determine whether or not to allow the state transition related to the state variable based on the change amount of energy. According to this method, determination for each of a plurality of state variables is repeatedly performed until a state transition is performed, for example, in such a manner that determination of the next one round is started in a case where one round of the state variables is completed, and any of the state transitions are not allowed. However, as the number of iterations increases while the state transition is not performed, a time taken to obtain a solution increases. For example, in a case of $\Delta E_i > 0$ for all indices i, for example, in a case of falling into a local solution or in a case of a low temperature ($\beta >> 1$), even though one round of determination for all state variables is repeated, the state transition does not occur, the sampling efficiency is deteriorated, and the time may be taken to obtain a solution.

Accordingly, when the number of times it is continuously determined that the value of the state variable is not to be changed reaches a predetermined number of times, the information processing apparatus 10 corrects the change amount of energy with the offset value $E_{off}$, so that the state transition related to each state variable is easily accepted and the state transition is promoted. For example, by setting $E_{off} = E_{off}^*$, the information processing apparatus 10 reliably causes the state transition to occur in at least one state variable and prompts the state transition. Since the stagnation of the state transition is suppressed in this manner, the information processing apparatus 10 may improve the efficiency of the solution search. As a result, the information processing apparatus 10 may reach a good solution in a short time. For example, it is possible to efficiently search for a good solution even for a problem with a small number of inversion candidates, for example, a combinatorial optimization problem with a large number of states in which energy takes a local minimum value.

[Second Embodiment]

Next, a second embodiment will be described.

FIG. 2 is a diagram illustrating an information processing apparatus according to the second embodiment.

As is the case with the information processing apparatus 10, an information processing apparatus 20 searches for a solution to a combinatorial optimization problem by using the SA, the PT, the PA, or the like, which is a type of the MCMC method, and outputs the searched solution. The information processing apparatus 20 includes a storage unit 21 and a processing unit 22. A storage unit 21 may be a volatile storage device such as a RAM, or may be a non-volatile storage device such as an HDD or a flash memory. The processing unit 22 may include a CPU, a DSP, an ASIC, a FPGA, a GPU, and the like. The processing unit 22 may be a processor that executes a program. The "processor" may include a set of multiple processors (multiprocessor).

As described in the first embodiment, the combinatorial optimization problem is replaced with a problem of obtaining a set of values of a plurality of state variables that minimize the energy function of Equation (1). Values of the plurality of state variables belonging to the state vector x of Equation (1) are stored in the storage unit 21.

The processing unit 22 selects a state variable of a change candidate, which is a part of the plurality of state variables, in a predetermined order, for example, sequentially. As an example, the processing unit 22 selects one state variable of the change candidate. Information indicating the predetermined order is set in the storage unit 21 in advance. For example, the predetermined order may be an order of indices i. Assuming that the number of all state variables is N, the order of each index i is i = 1, 2, ···, N - 1, N, 1, 2, ···, N, 1, 2, and ···. Alternatively, the predetermined order may be a random sequence $\Pi_1, \Pi_2, \cdots, \Pi_N, \Pi_1, \Pi_2$, and ···. Here, $\{\Pi_i\}$ is a rearrangement of {1, ···, N}. As will be described later, the processing unit 22 may select two or more state variables of the change candidates at a time.

Based on the change amount $\Delta E_i$ of energy represented by Equation (2), the processing unit 22 determines whether or not to change the value of the selected state variable $x_i$. For example, the processing unit 22 performs the determination by comparing the transition acceptance probability $A_i(\Delta E_i)$ represented by Equation (3) with the random number u ($0 < u < 1$). A method for the determination is the same as that in the determination by the processing unit 12. When it is determined that the value is to be changed, the processing unit 22 changes the value of the state variable $x_i$ and selects the next state variable to be determined in accordance with the above-described predetermined order.

By contrast, when it is determined that the value of the state variable $x_i$ is not to be changed, the processing unit 22 selects the next state variable to be determined without changing the value of the state variable $x_i$. The processing

unit 22 records, in the storage unit 21, the number of times it is continuously determined that the value of the state variable is not to be changed.

When the number of times it is continuously determined that the value of the state variable is not to be changed reaches a predetermined number of times, the processing unit 22 determines the state variable whose value is to be changed among the plurality of state variables based on a stochastic key value calculated in accordance with the change amount of energy and the random number, and changes the value of the determined state variable.

For example, it is considered that the processing unit 22 selects the state variable whose value is to be changed based on a weighted probability $P_i$ of Equation (6).

[Equation 6]

$$P_i = \frac{A_i}{\sum_{j=1}^{N} A_j} \tag{6}$$

The weighted probability $P_i$ indicates a probability that a change in the value of the state variable $x_i$ finally occurs after several trials. In this case, the processing unit 22 calculates a random number r in Equation (7), and determines to change a value of a state variable $x_k$ of an index k satisfying Equation (8). r of Equation (7) may be considered as a type of a stochastic key value.

[Equation 7]

$$r = u \sum_{j}^{N} A_j \tag{7}$$

[Equation 8]

$$\sum_{j=1}^{k-1} A_j < r \leq \sum_{j=1}^{k} A_j \tag{8}$$

Alternatively, the processing unit 22 may calculate a stochastic key value $k_i = k_i(\Delta E_i, u_i)$ represented by any one of Equations (9), (10), and (11) for each state variable, and determine to change a value of a state variable for which $k_i$ is a maximum value or a minimum value. $u_i$ is a mutually independent uniform random number of 0 < Ui < 1.

[Equation 9]

$$k_i = u_i^{1/A_i} \tag{9}$$

[Equation 10]

$$k_i = \log u_i / A_i \tag{10}$$

[Equation 11]

$$k_i = \max\left(0, \beta \Delta E_i\right) + \log\left(-\log u_i\right) \tag{11}$$

In a case of using Equations (9) and (10), the processing unit 22 selects a state variable for which $k_j$ is a maximum value. In a case of using Equation (11), the processing unit 22 selects a state variable for which $k_i$ is a minimum

value. Equation (11) corresponds to the Metropolis criterion. "log" in each equation is a natural logarithm. A denominator of Equation (10) is $A_i$, and a numerator is $\log(u_i)$.

Accordingly, when the state transition is delayed, it is possible to appropriately change the value of any of the state variables and promote the solution search. In a case of changing the value of any of the state variables by using the stochastic key value, the processing unit 22 selects the next state variable to be determined, and newly starts counting the number of times it is determined that the value of the state variable is not to be continuously changed, from 0. After changing the value of the state variable $x_i$ based on the stochastic key value, the next state variable to be determined may be a state variable next to the state variable $x_i$ selected in accordance with the above-described predetermined order or may be the first state variable in the order.

For example, when the number of times it is continuously determined that the value of the state variable is not to be changed reaches the number Z of times of determination of one round, the processing unit 22 may select the state variable whose value is to be changed based on the stochastic key value. When the number of the state variables of the change candidates selected at a time is one, the number Z of times of determination of one round may be Z = N.

FIG. 2 illustrates a processing example by the information processing apparatus 20. For example, a state vector 30 includes state variables $x_1$, $x_2$, ···, and $x_N$. The number Z of times of determination of one round is set to N. The processing unit 22 sequentially selects $x_1$, $x_2$, ···, and $x_N$ one by one, and determines whether or not to accept a state transition. When the number of times it is continuously determined that the value of the state variable is not to be changed reaches Z = N, the processing unit 22 uses the stochastic key value $k_i(\Delta E_i, u_i)$ to determine to change a value of a state variable xM corresponding to a stochastic key value $k_M(\Delta E_M, u_M)$, for example, and changes the value of the state variable $x_M$. For example, depending on which one of Equations (9) to (11) is used, the processing unit 22 may store, in the storage unit 21, the maximum value or the minimum value of the stochastic key value $k_i(\Delta E_i, u_i)$ obtained while it is continuously determined that the value of the state variable is not to be changed to obtain the stochastic key value $k_M(\Delta E_M, u_M)$.

The processing unit 22 may set the number of the state variables of the change candidates selected at a time to two or more, and may simultaneously change the values of the state variables of the two or more change candidates for one transition determination. The processing unit 22 may calculate $\Delta E$ in a case where the values of two or more state variables are changed, from the change amount of energy based on Equation (2) for each of the two or more state variables.

For example, a sequence for selecting two state variables may be an order represented by (1, 2), (1, 3), ···, (1, N), (2, 3), (2, 4), ···, (2, N), ···, and (N - 1, N) by using a set of indices. In this case, the number Z of times of determination of one round is Z = (N - 1) + (N - 2) + ··· + 1 = {N(N - 1)}/2.

Alternatively, a sequence for selecting the two state variables may be an order represented by $(\Pi_1, \Pi_2)$, $(\Pi_1, \Pi_3)$, ···-, and $(\Pi_{N-1}, \Pi_N)$. Here, $\{\Pi_i\}$ is a rearrangement of {1, ···, N}. In any case, the same set of the state variables is not selected two or more times in one round, for example, there is no duplication between the sets of the state variables selected in one round. In a case where the number of the state variables of the change candidates selected at a time is a (a is an integer of 1 or more), the number of the state variables selected by the processing unit 22 based on the stochastic key value is also a.

The processing unit 22 may perform a search in which the number of the state variables of the change candidates selected at a time is one, and then perform a search in which the number of the state variables of the change candidates selected at a time is two. The processing unit 22 may select the state variable to be determined in an order in consideration of a constraint that only one of the state variables belonging to a predetermined group is set to 1.

According to the information processing apparatus 20, search processing for searching for a solution of a problem represented by the energy function including the plurality of state variables is executed. The search processing includes selection processing, determination processing, and state change processing. In the selection processing, the processing unit 22 selects a state variable of a change candidate, which is a part of the plurality of state variables, in a predetermined order. In the determination processing, the processing unit 22 determines whether or not to change a value of the state variable of the change candidate based on the change amount of a value of the energy function corresponding to a change in the value of the state variable of the change candidate selected in the selection processing. In the state change processing, when it is determined in the determination processing that the value of the state variable of the change candidate is to be changed, the processing unit 22 changes the value of the state variable of the change candidate. In the search processing, the processing unit 22 repeatedly executes the selection processing, the determination processing, and the state change processing according to a predetermined order. The processing unit 22 executes the count processing of counting the number of times it is determined that the value of the state variable of the change candidate is not to be continuously changed during the search processing being repeatedly executed. When the number of times counted in the count processing reaches a predetermined number of times, the processing unit 22 selects a first state variable from the plurality of state variables based on the stochastic key value calculated in accordance with the change amount and the random number value, and changes the value of the first state variable.

Accordingly, the information processing apparatus 20 may improve the efficiency of the solution search.

For obtaining a solution to a problem represented by the energy function, it is considered to sequentially select the state variable as described above and determine whether or not to allow the state transition related to the state variable based on the change amount of energy. According to this method, determination for each of a plurality of state variables is repeatedly performed until a state transition is performed, for example, in such a manner that determination of the next one round is started when one round of the state variables is completed, and any of the state transitions are not allowed. However, as the number of iterations increases while the state transition is not performed, a time taken to obtain a solution increases. For example, in a case of $\Delta E_i > 0$ for all indices i, for example, in a case of falling into a local solution or in a case of a low temperature ($\beta >> 1$), even though one round of determination for all state variables is repeated, the state transition does not occur, the sampling efficiency is deteriorated, and the time may be taken to obtain a solution.

Accordingly, when the number of times it is continuously determined that the value of the state variable is not to be changed reaches a predetermined number of times, the information processing apparatus 20 determines a state variable subjected to a transition by using the stochastic key value in accordance with the change amount of energy and the random number value, and changes a value of the state variable to prompt the state transition. Since the stagnation of the state transition is suppressed in this manner, the information processing apparatus 20 may improve the efficiency of the solution search. As a result, the information processing apparatus 20 may reach a good solution in a short time. For example, it is possible to efficiently search for a good solution even for a problem with a small number of inversion candidates, for example, a combinatorial optimization problem with a large number of states in which energy takes a local minimum value.

Hereinafter, the information processing apparatuses 10 and 20 will be described more specifically.

[Third Embodiment]

Next, a third embodiment will be described.

FIG. 3 is a diagram illustrating a hardware example of an information processing apparatus according to the third embodiment.

An information processing apparatus 100 searches for a solution to a combinatorial optimization problem by using the MCMC method, and outputs the searched solution. The information processing apparatus 100 includes a CPU 101, a RAM 102, an accelerator card 103, an HDD 104, a GPU 105, an input interface (IF) 106, a medium reader 107, and a network interface card (NIC) 108.

The CPU 101 is a processor that executes a command of a program. The CPU 101 loads at least part of the program or data stored in the HDD 104 into the RAM 102, and executes the program. The CPU 101 may include a plurality of processor cores. The information processing apparatus 100 may include a plurality of processors. Processing described below may be executed in parallel by using the plurality of processors or processor cores. A set of the plurality of processors may be referred to as a "multiprocessor" or merely referred to as a "processor" in some cases.

The RAM 102 is a volatile semiconductor memory that temporarily stores the program executed by the CPU 101 or data used for the operation by the CPU 101. The information processing apparatus 100 may include memories of types other than the RAM, and may include a plurality of memories.

The accelerator card 103 is a hardware accelerator that searches for a solution to a problem represented by an Ising-type energy function represented by Equation (1) by using the MCMC method. By performing the MCMC method at a fixed temperature or the PT method in which a state of the Ising model is exchanged between a plurality of temperatures, the accelerator card 103 may be used as a sampler that samples a state according to Boltzmann distribution at the corresponding temperature. For obtaining a solution to the combinatorial optimization problem, the accelerator card 103 executes annealing processing such as the PT method or the SA method in which a temperature value is gradually decreased.

The SA method is a method of efficiently finding an optimum solution by decreasing a temperature value used during the sampling from a high temperature to a low temperature, for example, increasing the inverse temperature $\beta$. Since the state is changed to some extent even in a case where the low temperature side, for example, $\beta$ is large, there is a high possibility that a good solution may be found even though the temperature value is decreased rapidly. For example, when the SA method is used, the accelerator card 103 repeats an operation of decreasing the temperature value after repeating a certain number of trials of a state transition at a certain temperature value.

The PT method is a method in which the MCMC method is independently executed using a plurality of temperature values, and the temperature values are appropriately exchanged for a state obtained at each of the temperature values. By searching for a narrow range of a state space by the MCMC method at a low temperature and searching for a wide range of the state space by the MCMC method at a high temperature, it is possible to efficiently find a good solution. For example, when the PT method is used, the accelerator card 103 repeats an operation in which a parallel trial of a state transition at each of the plurality of temperature values is performed, and every time a certain number of trials are performed, each temperature value is exchanged at a predetermined exchange probability for states obtained at each temperature value.

The accelerator card 103 includes a FPGA 111 and a RAM 112. The FPGA 111 implements a search function in the accelerator card 103. The search function may be implemented by another type of an integrated circuit such as a GPU or an ASIC. The RAM 112 holds data used for the search in the FPGA 111, or a solution searched by the FPGA 111.

The hardware accelerator that searches for the solution to an Ising form problem such as the accelerator card 103 may be referred to as an Ising machine, a Boltzmann machine, or the like. Alternatively, the information processing apparatus 100 may include a plurality of accelerator cards.

The HDD 104 is a non-volatile storage device that stores data as well as programs of software such as an operating system (OS), middleware, and application software. The information processing apparatus 100 may include other another type of a storage device such as a flash memory or a solid-state drive (SSD), and may include a plurality of non-volatile storage devices.

The GPU 105 outputs an image to a display 51 coupled to the information processing apparatus 100 in accordance with a command from the CPU 101. An arbitrary type of a display such as a cathode ray tube (CRT) display, a liquid crystal display (LCD), a plasma display, or an organic electro-luminescence (OEL) display may be used as the display 51.

The input IF 106 acquires an input signal from an input device 52 coupled to the information processing apparatus 100 and outputs the input signal to the CPU 101. As the input device 52, a pointing device such as a mouse, a touch panel, a touchpad, or a trackball, a keyboard, a remote controller, a button switch, or the like may be used. A plurality of types of input devices may be coupled to the information processing apparatus 100.

The medium reader 107 is a reading device that reads a program or data recorded in a recording medium 53. For example, a magnetic disk, an optical disc, a magneto-optical (MO) disk, a semiconductor memory, or the like may be used as the recording medium 53. The magnetic disk includes a flexible disk (FD) or an HDD. The optical disc includes a compact disc (CD) or a digital versatile disc (DVD).

The medium reader 107 copies, for example, the program and data read from the recording medium 53 to another recording medium such as the RAM 102 or the HDD 104. The read program is executed by, for example, the CPU 101. The recording medium 53 may be a portable-type recording medium, and may be used to distribute the program and the data. The recording medium 53 and the HDD 104 may be referred to as computer-readable recording media in some cases.

The NIC 108 is an interface that is connected to a network 54 and communicates with another computer via the network 54. The NIC 108 is connected, for example, to a communication device such as a switch or a router via a cable.

The FPGA 111 is an example of the processing unit 12 according to the first embodiment and the processing unit 22 according to the second embodiment. The RAM 112 is an example of the storage unit 11 according to the first embodiment and the storage unit 21 according to the second embodiment.

A function of the accelerator card 103 may be implemented by causing the CPU 101 to execute a program stored in the RAM 102. In this case, the CPU 101 is an example of the processing unit 12 according to the first embodiment and the processing unit 22 according to the second embodiment. The RAM 102 is an example of the storage unit 11 according to the first embodiment and the storage unit 21 according to the second embodiment.

FIG. 4 is a diagram illustrating a function example of the information processing apparatus.

The information processing apparatus 100 includes a coefficient holding unit 120, a search processing unit 130, and a control unit 190. A storage area of the RAM 102 or the HDD 104 is used for the coefficient holding unit 120. The search processing unit 130 is implemented by the accelerator card 103. The control unit 190 is implemented by causing the CPU 101 to execute a program stored in the RAM 102.

The coefficient holding unit 120 holds a weight coefficient $\{W_{ij}\}$ corresponding to all combinations of two state variables included in the energy function.

Based on the energy function and the weight coefficient that is stored in the coefficient holding unit 120, the search processing unit 130 searches for a solution corresponding to the ground state of the Ising model. One set of all the state variables included in the energy function is referred to as a replica. The search processing unit 130 includes a replica update unit 140, an index generation unit 150, and a random number generation unit 160.

The replica update unit 140 updates a single replica by using the SA method, the PT method, or the like. Based on an index input from the index generation unit 150, the replica update unit 140 sequentially selects a state variable to be a state transition candidate. Details of the replica update unit 140 will be described later.

The index generation unit 150 generates an index indicating the next state variable of the change candidate, and inputs the index to the replica update unit 140. The index generation unit 150 generates indices in a predetermined order designated in advance by the control unit 190, and inputs the indices to the replica update unit 140. As an example, the number of the state variables of the change candidates in one trial is one. In this case, the index generation unit 150 inputs one index indicating the state variable of the next change candidate to the replica update unit 140.

For example, the predetermined order may be an order of indices i. Assuming that the number of all state variables is N, the order of each index i is i = 1, 2, ···, N - 1, N, 1, 2, ···, N, 1, 2, and ···. An order obtained by randomly skipping indices from the order of the indices i may be used. As such a method, for example, Document 1 below is referred to.

Document 1: Ren et al., "Acceleration of Markov chain Monte Carlo simulations through sequential updating", J. Chem. Phys. Volume 124, Issue 6, 064109, 2006.

Alternatively, the predetermined order may be a random sequence $\Pi_1$, $\Pi_2$, ···, $\Pi_N$, $\Pi_1$, $\Pi_2$, and ···. Here, $\{\Pi_i\}$ is a rearrangement of {1, ···, N}. An arrangement order of {1, ···, N} with respect to $\{\Pi_i\}$ may be changed at a predetermined timing for each one round or some rounds. As will be described later, the number of the state variables of the change candidates in one trial may be two or more. In this case, the index generation unit 150 inputs two or more indices indicating the state variable of the next change candidate to the replica update unit 140.

The random number generation unit 160 generates a uniform random number u ($0 < u < 1$) used for acceptance determination of a state transition based on the transition acceptance probability $A_i$ of Equation (3) and the transition acceptance probability $A'_i$ of Equation (4), and inputs the uniform random number u to the replica update unit 140.

The control unit 190 acquires information on a combinatorial optimization problem input from a user, and generates information on an energy function corresponding to the combinatorial optimization problem. The control unit 190 stores a weight coefficient corresponding to the combinatorial optimization problem in the coefficient holding unit 120. The control unit 190 inputs a parameter such as a temperature value used for a search, an order of indices generated by the index generation unit 150, and the like to the search processing unit 130 and causes the search processing unit 130 to start a solution search.

The control unit 190 acquires a solution searched by the search processing unit 130. The control unit 190 converts the acquired solution into a form of a solution to the combinatorial optimization problem, and causes the display 51 to display the solution or transmits the solution to a terminal device used by the user via the network 54, to provide the solution to the user.

For example, Document 2 below is referred to as a method of sequentially performing the transition determination as described above.

Document 2: Manousiouthakis et al., "Strict Detailed Balance is Unnecessary in Monte Carlo Simulation", J. Chem. Phys. Volume 110, Issue 6, pp. 2753-2756, 1999.

FIG. 5 is a diagram illustrating a function example of the replica update unit.

The replica update unit 140 includes a cache 141, a state holding unit 142, a ΔE calculation unit 143, an acceptance determination unit 144, and an offset setting unit 145.

The cache 141 holds weight coefficients $\{W_{1i}, W_{2i}, \cdots, W_{Ni}\}$ related to an index i of the next transition candidate input from the index generation unit 150. The replica update unit 140 prefetches the weight coefficients $\{W_{1i}, W_{2i}, \cdots, W_{Ni}\}$ to the cache 141.

The state holding unit 142 holds current values $\{x_1, x_2, \cdots, x_N\}$ of a plurality of state variables, an energy E corresponding to the current values of the plurality of state variables, and a reciprocal β of the current temperature values. The state holding unit 142 holds local fields $h_1$, $h_2$, ···, and hN corresponding to the state variables $x_1$, $x_2$, ···, and $x_N$. A local field $h_i$ is represented by Equation (12).

[Equation 12]

$$h_i = \sum_j W_{ij} x_j + b_i \qquad (12)$$

The state holding unit 142 outputs the local field $h_i$ related to the index i of the next transition candidate input from the index generation unit 150 to the ΔE calculation unit 143.

Based on the local field $h_i$ held in the state holding unit 142, the ΔE calculation unit 143 calculates the change amount $\Delta E_i$ of energy by Equation (13).

[Equation 13]

$$\begin{aligned}\Delta E_i &= -\delta x_i h_i \\ &= \begin{cases} -h_i & for\ x_i = 0 \rightarrow 1 \\ +h_i & for\ x_i = 1 \rightarrow 0 \end{cases}\end{aligned} \qquad (13)$$

The ΔE calculation unit 143 outputs the calculated $\Delta E_i$ to the acceptance determination unit 144.

The acceptance determination unit 144 performs correction of subtracting the offset value $E_{off}$ input from the offset setting unit 145 from $\Delta E_i$ input from the $\Delta E$ calculation unit 143. Based on the corrected change amount ($\Delta E_i$ - $E_{off}$), the acceptance determination unit 144 calculates the transition acceptance probability $A'_i$ of Equation (4). Normally, $E_{off}$ = 0 is set by the offset setting unit 145. In a case of $E_{off}$ = 0, the transition acceptance probability $A'_i = A_i$.

By comparing the uniform random number u input from the random number generation unit 160 with the transition acceptance probability $A'_i$, the acceptance determination unit 144 determines whether or not to accept the state transition of the index i. When $u < A'_i$, the acceptance determination unit 144 accepts the state transition of the index i. Unless $u < A'_i$, the processing unit 12 does not accept the state transition of the index i, for example, rejects the state transition of the index i.

The acceptance determination unit 144 may take a natural logarithm of u, $A'_i$, and may accept the state transition of the index i when $\log(u) < -\beta(\Delta E_i - E_{off})$ is satisfied, and may not accept the state transition of the index i when $\log(u) < -\beta(\Delta E_i - E_{off})$ is not satisfied. In this manner, since the acceptance determination unit 144 may perform determination by holding information of log(u) and calculating the left side of the determination equation, and may not calculate the transition acceptance probability $A'_i$, for example, the acceptance determination may be performed at high speed.

When the state transition of the index i is accepted, the state holding unit 142 notifies the state holding unit 142 that the state transition of the index i is accepted. Based on the notification, the state holding unit 142 inverts the value of the state variable $x_i$. The state holding unit 142 carries out updating to $E = E + \Delta E_i$ based on $\Delta E_i$. The state holding unit 142 updates the local fields $h_1, h_2, \cdots,$ and $h_N$ based on the weight coefficients held in the cache 141.

A change amount $\delta h_i^{(j)}$ of the local field $h_i$ in a case where the value of the state variable $x_j$ is inverted is represented by Equation (14).

[Equation 14]

$$\delta h_i^{(j)} = \begin{cases} +W_{ij} & for\ x_j = 0 \rightarrow 1 \\ -W_{ij} & for\ x_j = 1 \rightarrow 0 \end{cases} \quad (14)$$

When the state transition of the index i is rejected, the acceptance determination unit 144 notifies the offset setting unit 145 of the rejection of the state transition of the index i.

The offset setting unit 145 sets an offset value $E_{off}$. The offset setting unit 145 includes an offset holding unit 145a and an offset control unit 145b.

The offset holding unit 145a holds the offset value $E_{off}$ and outputs the offset value $E_{off}$ to the acceptance determination unit 144. The offset value $E_{off}$ held by the offset holding unit 145a is set by the offset control unit 145b. A default value of the offset value $E_{off}$ is 0. The offset value $E_{off}$ held by the offset holding unit 145a is reset to 0 by the acceptance determination unit 144 when the state transition is accepted by the acceptance determination unit 144.

The offset control unit 145b counts the number of times a state transition is continuously rejected by the acceptance determination unit 144, and changes the offset value $E_{off}$ held in the offset holding unit 145a from 0 to $E_{off}^*$ when the number of times reaches the number Z of times of determination of one round of the transition determination. $E_{off}^*$ is represented by Equation (5). For example, when the number of the state variables of change candidates selected at a time is one, the number Z of times of determination of one round may be N. By holding a minimum value $\Delta E_{min}$ of the change amount of energy obtained while the state transition is continuously rejected, the offset control unit 145b may obtain $E_{off}^*$ as $E_{off}^* = \Delta E_{min}$ when the number of times a state transition is continuously rejected reaches Z.

An arithmetic function, the index generation unit 150, and the random number generation unit 160 in the replica update unit 140 are implemented by the FPGA 111. The RAM 112 is used for holding data in the replica update unit 140.

The search processing unit 130 is implemented by causing the CPU 101 to execute a program stored in the RAM 102. In this case, information held in the search processing unit 130 may be held in a cache of the RAM 102 or the CPU 101.

FIG. 6 is a flowchart illustrating a processing example of the information processing apparatus.

(S10) The control unit 190 stores the weight coefficient in the coefficient holding unit 120 and initializes the replica update unit 140. In the initialization, the control unit 190 sets an initial temperature value used in the SA method or the PT method and the number of iterations (specified number of iterations) of trials in a search in the replica update unit 140, and sets an order of scanning state variables in the index generation unit 150. The control unit 190 may set an initial solution (the first value of each of the state variables $x_1, x_2, \cdots,$ and $x_N$), an initial value of a local field, and an initial value of energy in the replica update unit 140. The control unit 190 resets the offset value $E_{off}$ held in the offset holding unit 145a to $E_{off}$ = 0. The control unit 190 resets an unupdated counter n held in the offset control unit 145b to n = 0, and resets $\Delta E_{min}$ to a relatively large initial value. The unupdated counter n is a counter for counting the number of times a state transition is continuously rejected. The control unit 190 causes the search processing unit 130 to start the solution search.

(S11) The replica update unit 140 reads the next index i generated by the index generation unit 150. The replica update unit 140 prefetches the weight coefficients $\{W_{1i}, W_{2i}, \cdots, W_{Ni}\}$ corresponding to the index i to the cache 141.

(S12) The replica update unit 140 calculates $\Delta E_i$, subtracts $E_{off}$ from $\Delta E_i$, and updates $\Delta E_{min}$. As described above, $\Delta E_i$ is calculated by the $\Delta E$ calculation unit 143. Subtraction of $E_{off}$ from $\Delta E_i$ is performed by the acceptance determination unit 144. Update of $\Delta E_{min}$ is performed by the offset control unit 145b. Update of $\Delta E_{min}$ is represented as $\Delta E_{min} = \min(\Delta E_{min}, \max(0, \Delta E_i))$.

(S13) Based on the uniform random number u input from the random number generation unit 160, the replica update unit 140 determines whether or not to accept the inversion of the value of the state variable $x_i$, for example, whether or not to accept the state transition of the index i. When the determination of the value of the state variable $x_i$ is accepted, for example, the state transition of the index i is accepted, the processing proceeds to step S14. When the inversion of the value of the state variable $x_i$ is not accepted, for example, the state transition of the index i is rejected, the processing proceeds to step S15. Determination of step S13 is performed by the acceptance determination unit 144. As described above, in the determination of step S13, the acceptance determination unit 144 may determine whether or not the determination equation of $u < A'_i$ is true or whether or not the determination equation of $\log(u) < -\beta(\Delta E_i - E_{off})$ is true.

(S14) The replica update unit 140 updates the state variable $x_i$ and the local field $h_i$. The replica update unit 140 resets n to 0 and $E_{off}$ to 0, and resets $\Delta E_{min}$. For example, the replica update unit 140 inverts the value of the state variable $x_i$ held in the state holding unit 142 to update the energy to $E = E + \Delta E_i$, and updates the local fields $\{h_1, h_2, \cdots, h_N\}$ in accordance with the inversion. The processing proceeds to step S18.

(S15) The replica update unit 140 determines whether or not the unupdated counter n is equal to or greater than the number N of times of determination of one round, for example, whether or not the counter $n \geq N$. In the case of $n \geq N$, the processing proceeds to step S16. In a case of $n < N$, the processing proceeds to step S17. Determination of step S15 is performed by the offset control unit 145b.

The determination of step S15 may also be determination whether or not the unupdated counter n has reached the number N of times of determination of one round, for example, whether or not $n = N$. In the case of $n = N$, the processing proceeds to step S16, and in a case of $n \neq N$, the processing proceeds to step S17.

(S16) The replica update unit 140 sets $E_{off} = \Delta E_{min}$. For example, the offset control unit 145b sets the offset value held in the offset holding unit 145a to $E_{off} = \Delta E_{min}$. The processing proceeds to step S18.

(S17) The replica update unit 140 increments the unupdated counter n. For example, the offset control unit 145b sets $n = n + 1$. The processing proceeds to step S18.

(S18) The replica update unit 140 determines whether or not the value of the state variable has been updated by a specified number of times. When the state variable has been updated by the specified number of times, the processing ends. When the state variable is not updated by the specified number of times, the processing proceeds to step S11.

According to the above-described procedure, when one round of scan is completed without inversion, since $A'_i = 1$ at least at an index at which $\Delta E_i$ takes a minimum value in the next scan, it is possible to invert a value of at least one state variable in the next scan.

As described above, the search processing unit 130 may use the SA method, the PT method, or the like for the solution search. According to the SA method or the PT method, a temperature value T for the replica is changed at a predetermined timing. Therefore, the above-described steps S11 to S18 may be considered to be a series of procedures for one temperature value T. For example, in a case of YES in step S18, the search processing unit 130 repeatedly performs a procedure of changing to the next temperature value T and repeating steps S11 to S18, and outputs a set of values of a plurality of state variables finally obtained by the state holding unit 142 as a solution to the control unit 190. Along with the above solution, the search processing unit 130 may output energy corresponding to the solution to the control unit 190.

In step S15, it is determined whether or not one round of the value of the state variable is completed without being inverted based on the unupdated counter n. As a method of determining that one round of scan of the state variable is performed, the following two methods are conceivable. According to a first method, it is determined that one round has been completed when all permutations of the indices generated in advance are consumed. According to a second method, it is determined that one round has been completed when the number N of the state variables counted from the middle of the immediately preceding one round has elapsed. Although the flowchart in FIG. 6 illustrates the second method, the first method may be used.

The search processing unit 130 may set the number of the state variables of the change candidates selected at a time to two or more, and may simultaneously change the values of the state variables of the two or more change candidates for one transition determination. The search processing unit 130 may calculate $\Delta E$ in a case where the values of two or more state variables are changed, from the change amount of energy based on Equation (2) for each of the two or more state variables.

For example, a sequence for selecting two state variables may be an order represented by (1, 2), (1, 3), $\cdots$, (1,

N), (2, 3), (2, 4), ···, (2, N), ···, and (N - 1, N) by using a set of indices. Alternatively, a sequence for selecting the two state variables may be an order represented by ($\Pi_1$, $\Pi_2$), ($\Pi_1$, $\Pi_3$), ···, and ($\Pi_{N-1}$, $\Pi_N$). Here, {$\Pi_i$} is a rearrangement of {1, ···, N}. The search processing unit 130 may change an arrangement order of {1, ···, N} with respect to {$\Pi_i$} at a predetermined timing for each one round or some rounds.

The search processing unit 130 may perform a search in which the number of the state variables of the change candidates selected at a time is one, and then perform a search in which the number of the state variables of the change candidates selected at a time is two. The search processing unit 130 may select the state variable to be determined in an order in consideration of a constraint that only one of the state variables belonging to a predetermined group is set to 1. Examples of such constraints include those referred to as 1W1H (1-Way 1-Hot) and 2W1H (2-Way 1-Hot).

When, for example, two state variables are simultaneously changed in parallel search in which a plurality of state transitions are simultaneously set as transition candidates and one state transition is selected from the plurality of state transitions, the number of combinations of the transition candidates increases to N(N - 1). Therefore, in the parallel search, it is not realistic to perform a search in which two or more state variables are simultaneously changed. By contrast, in a method of sequentially selecting state variables, a search in which two or more state variables are simultaneously changed may be easily performed, and the degree of freedom of the search may be improved. As an example of the parallel search, Japanese Laid-open Patent Publication No. 2019-125155 may be used as a reference.

For obtaining a solution to a problem represented by the energy function, it is considered to sequentially select the state variable as described above and determine whether or not to allow the state transition related to the state variable based on the change amount of energy. According to this method, determination for each of a plurality of state variables is repeatedly performed until a state transition is performed, for example, in such a manner that determination of the next one round is started in a case where one round of the state variables is completed, and any of the state transitions are not allowed. However, as the number of iterations increases while the state transition is not performed, a time taken to obtain a solution increases.

Accordingly, when the number of times it is continuously determined that the value of the state variable is not to be changed reaches a predetermined number of times, the information processing apparatus 100 corrects the change amount of energy with the offset value $E_{off}$, so that the state transition related to each state variable is easily accepted and the state transition is promoted. For example, by setting $E_{off} = E_{off}^*$, the information processing apparatus 100 reliably causes the state transition to occur in at least one state variable and prompts the state transition.

Since the stagnation of the state transition is suppressed in this manner, the information processing apparatus 100 may improve the efficiency of the solution search. As a result, the information processing apparatus 100 may reach a good solution in a short time. For example, it is possible to efficiently search for a good solution even for a problem with a small number of inversion candidates, for example, a combinatorial optimization problem with a large number of states in which energy takes a local minimum value.

FIG. 7 is a diagram illustrating exemplary solution results (part 1).

A graph G10 illustrates exemplary solution results at a low temperature (T = 0.01) for a ferromagnetic Ising model. The graph G10 is obtained by executing a simulation 200 times while changing a random number seed, and plotting the number of trials that has reached a solution and a cumulative frequency thereof. A horizontal axis of the graph G10 indicates the number of trials that has reached a solution. A vertical axis of the graph G10 indicates the cumulative frequency of runs that has reached a solution by percentage. The term "run" corresponds to one of the simulation 200 times.

The number of the state variables of the ferromagnetic Ising model set in the problem is 32 x 32 = 1024, and periodic boundary conditions were applied. An initial state of the search is random, and all the state variables are 0 or 1 in the ground state (lowest energy state). In this case, it is theoretically estimated that a run of about 2/3 is confined to the local solution.

The graph G10 illustrates serieses G11, G12, and G13.

The series G11 is a result in a case where the parallel search in which a plurality of state transitions are simultaneously set as transition candidates and one state transition is selected from the plurality of state transitions is used.

The series G12 is a result in a case where state variables are sequentially selected and a search is performed without applying the offset value $E_{off}$.

The series G13 is a result in a case where state variables are sequentially selected and a search is performed with applying the offset value $E_{off}$ by the function of the information processing apparatus 100.

When the serieses G11 and G12 are compared with each other, it may be seen that a sequential method is about three times faster than the parallel search in which a plurality of state transitions are simultaneously set as transition candidates.

When the serieses G12 and G13 are compared with each other, it may be seen that the percentage of runs reaching the solution further increases by applying the offset value in the sequential method. As described above, by using the offset value, a larger number of runs may reach a solution in a relatively short time, and solution finding performance may be improved.

FIG. 8 is a diagram illustrating exemplary solution results (part 2).

A graph G20 illustrates exemplary solution results by the PT method for a quadratic assignment problem (QAP). The graph G20 is obtained by executing a simulation 200 times while changing a random number seed, and plotting the number of trials that has reached a solution and a cumulative frequency thereof. A horizontal axis of the graph G20 indicates the number of trials that has reached a solution. A vertical axis of the graph G20 indicates the cumulative frequency of runs that has reached the solution by percentage.

The target QAP is esc16a of QAPLIB. The number of the state variables is 16 x 16 = 256. All state variables were set to 0 in the initial state. A range of the temperature value T is 0.5 to 5.0. The number of replicas is 26. The number of trials until a temperature value or a state is exchanged, for example, an exchange interval is 256.

The graph G20 illustrates serieses G21, G22, and G23.

The series G21 is a result in a case of using the parallel search in which a plurality of state transitions are simultaneously set as transition candidates and one state transition is selected from the plurality of state transitions.

The series G22 is a result in a case where state variables are sequentially selected and a search is performed without applying the offset value $E_{off}$.

The series G23 is a result in a case where state variables are sequentially selected and a search is performed with applying the offset value $E_{off}$ by the function of the information processing apparatus 100.

When the series G23 is compared with the serieses G21 and G22, it may be seen that the number of trials until the solution is reached is reduced to about 1/2 by the offset value $E_{off}$. As described above, it is possible to escape from the local solution with a smaller number of trials by the offset value $E_{off}$, and it is possible to reach the optimum solution several times faster than a case where the offset value $E_{off}$ is not used.

[Fourth Embodiment]

Next, a fourth embodiment will be described. Items different from the above-described third embodiment will be mainly discussed below while omitting explanations of the common items.

FIG. 9 is a diagram illustrating a function example of a replica update unit according to the fourth embodiment.

An information processing apparatus 100a is implemented by the same hardware as that of the information processing apparatus 100. As in the information processing apparatus 100, the information processing apparatus 100a includes the coefficient holding unit 120, the search processing unit 130, and the control unit 190 illustrated in FIG. 4. FIG. 9 illustrates a replica update unit 140a, the index generation unit 150, and the random number generation unit 160 included in the search processing unit 130, and does not illustrate the search processing unit 130 and the control unit 190.

The information processing apparatus 100a is different from that of the third embodiment in that the replica update unit 140a is included instead of the replica update unit 140 in the search processing unit 130.

The replica update unit 140a includes the cache 141, the state holding unit 142, the ΔE calculation unit 143, the acceptance determination unit 144, and a stochastic key setting unit 146. The cache 141, the state holding unit 142, the ΔE calculation unit 143, and the acceptance determination unit 144 perform processing similar to those of the functions having the same names illustrated in FIG. 5. However, in the fourth embodiment, when the state transition of the index i is rejected, the acceptance determination unit 144 notifies the stochastic key setting unit 146 of the rejection of the state transition of the index i.

Based on Equation (11), the stochastic key setting unit 146 obtains a stochastic key value $k_i$ for the index i. According to the fourth embodiment, the stochastic key value is abbreviated as a probability key.

The stochastic key setting unit 146 counts the number of times a state transition is continuously rejected by the acceptance determination unit 144, determines the state variable whose value is to be changed based on the stochastic key $k_i$ when the number of times reaches the number Z of times of determination of one round of the transition determination, and notifies the state holding unit 142 of the state variable.

For example, when the number of the state variables of change candidates selected at a time is one, the number Z of times of determination of one round may be N. The stochastic key setting unit 146 holds the minimum value $k_{min}$ of the stochastic key obtained while the state transition is continuously rejected, $\Delta E_m$ used for calculating $k_{min}$, and an index m thereof. When the number of times of continuous rejection reaches Z, the stochastic key setting unit 146 determines a state variable of the index m corresponding to the held $k_{min}$, as being subjected to a transition, and notifies the state holding unit 142 of state variables $x_m$ and $\Delta E_m$ corresponding to $k_{min}$.

The state holding unit 142 inverts the value of the state variable $x_m$ subjected to a transition, which is received from the stochastic key setting unit 146. The state holding unit 142 carries out updating to $E = E + \Delta E_m$ based on $\Delta E_m$. The state holding unit 142 updates the local fields $h_1$, $h_2$, ···, and $h_N$ based on the weight coefficients held in the cache 141.

Based on the stochastic key $k_i$ based on Equation (9) or Equation (10), the stochastic key setting unit 146 may determine the state variable whose value is to be changed. In this case, as described above, the stochastic key setting unit 146 changes the value of the state variable that takes a maximum stochastic key. The stochastic key setting unit 146 may determine the state variable whose value is to be changed, based on the weighted probability $P_i$ in Equation

(6). In this case, the stochastic key setting unit 146 calculates the random number r in Equation (7), and determines to change the value of the state variable $x_k$ of the index $_k$ satisfying Equation (8). r of Equation (7) may also be considered as a stochastic key in accordance with the random number u and the change amount $\Delta E_i$.

The search processing unit 130, and the replica update unit 140a, the index generation unit 150, and the random number generation unit 160 included in the search processing unit 130 are implemented by the accelerator card 103 included in the information processing apparatus 100a. An arithmetic function, the index generation unit 150, and the random number generation unit 160 in the replica update unit 140a are implemented by the FPGA 111. The RAM 112 is used for holding data in the replica update unit 140a.

The search processing unit 130, and the replica update unit 140a, the index generation unit 150, and the random number generation unit 160 included in the search processing unit 130 may be implemented by causing the CPU 101 to execute the program stored in the RAM 102 included in the information processing apparatus 100a. In this case, information held in the search processing unit 130 may be held in a cache of the RAM 102 or the CPU 101.

FIG. 10 is a flowchart illustrating a processing example of the information processing apparatus.

(S20) The control unit 190 stores the weight coefficient in the coefficient holding unit 120 and initializes the replica update unit 140a. In the initialization, the control unit 190 sets an initial temperature value used in the SA method or the PT method and the number of iterations (specified number of times) of trials in a search in the replica update unit 140a, and sets an order of scanning state variables in the index generation unit 150. The control unit 190 may set an initial solution, an initial value of a local field, and an initial value of energy in the replica update unit 140a. The control unit 190 resets $k_{min}$ held in the stochastic key setting unit 146 to a relatively large initial value. The control unit 190 resets an unupdated counter n held in the stochastic key setting unit 146 to n = 0. The control unit 190 causes the search processing unit 130 to start the solution search.

(S21) The replica update unit 140a reads the next index i generated by the index generation unit 150. The replica update unit 140a prefetches the weight coefficients $\{W_{1i}, W_{2i}, \cdots, W_{Ni}\}$ corresponding to the index i to the cache 141.

(S22) The replica update unit 140a calculates $\Delta E_i$ and updates $k_{min}$. As described above, $\Delta E_i$ is calculated by the $\Delta E$ calculation unit 143. Update of $k_{min}$ is performed by the stochastic key setting unit 146. Update of $k_{min}$ is represented as $k_{min} = \min(k_{min}, k_i)$. $K_i$ is represented by Equation (11). The stochastic key setting unit 146 also holds $\Delta E_i$ and the index i corresponding to $k_{min}$.

(S23) Based on the uniform random number u input from the random number generation unit 160, the replica update unit 140a determines whether or not to accept the inversion of the value of the state variable $x_i$, for example, whether or not to accept the state transition of the index i. When the determination of the value of the state variable $x_i$ is accepted, for example, the state transition of the index i is accepted, the processing proceeds to step S24. When the inversion of the value of the state variable $x_i$ is not accepted, for example, the state transition of the index i is rejected, the processing proceeds to step S25. Determination of step S23 is performed by the acceptance determination unit 144. As described above, in the determination of step S23, the acceptance determination unit 144 may determine whether or not the determination equation of $u < A'_i$ is true or whether or not the determination equation of $\log(u) < -\beta(\Delta E_i - E_{off})$ is true.

(S24) The replica update unit 140a updates the state variable $x_i$ and the local field $h_i$. The replica update unit 140a resets n to 0 and $E_{off}$ to 0, and resets $\Delta E_{min}$. For example, the replica update unit 140a inverts the value of the state variable $x_i$ held in the state holding unit 142 to update the energy to $E = E + \Delta E_i$, and updates the local fields $\{h_1, h_2, \cdots, h_N\}$ in accordance with the inversion. The processing proceeds to step S28.

(S25) The replica update unit 140a determines whether or not the unupdated counter n is equal to or greater than the number N of times of determination of one round, for example, whether or not the counter $n \geq N$. In the case of $n \geq N$, the processing proceeds to step S26. In a case of $n < N$, the processing proceeds to step S27. Determination of step S25 is performed by the stochastic key setting unit 146.

The determination of step S25 may also be determination whether or not the unupdated counter n has reached the number N of times of determination of one round, for example, whether or not n = N. When n = N, the processing proceeds to step S26, and when n is not the same as N, the processing proceeds to step S27.

(S26) The replica update unit 140a updates the state variable $x_m$ corresponding to the stochastic key $k_{min}$ and the local field $h_i$. The replica update unit 140a resets n to 0 and resets $k_{min}$. For example, the replica update unit 140a inverts the value of the state variable $x_i$ held in the state holding unit 142 to update the energy to $E = E + \Delta E_m$, and updates the local fields $\{h_1, h_2, \cdots, h_N\}$ in accordance with the inversion. The processing proceeds to step S28.

(S27) The replica update unit 140a increments the unupdated counter n. For example, the stochastic key setting unit 146 sets n = n + 1. The processing proceeds to step S28.

(S28) The replica update unit 140a determines whether or not the value of the state variable has been updated by a specified number of times. When the state variable has been updated by the specified number of times, the processing ends. When the state variable is not updated by the specified number of times, the processing proceeds to step S21.

According to the above-described procedure, when inversion does not occur after one round of scan is completed, it is possible to invert a value of a state variable corresponding to an index for which the stochastic key has a minimum value.

As described above, the search processing unit 130 may use the SA method, the PT method, or the like for the solution search. According to the SA method or the PT method, a temperature value T for the replica is changed at a predetermined timing. Therefore, the above-described steps S21 to S28 may be considered to be a series of procedures for one temperature value T. For example, in a case of YES in step S28, the search processing unit 130 repeatedly performs a procedure of changing to the next temperature value T and repeating steps S21 to S28, and outputs a set of values of a plurality of state variables finally obtained by the state holding unit 142 as a solution to the control unit 190. Along with the above solution, the search processing unit 130 may output energy corresponding to the solution to the control unit 190.

In step S25, it is determined whether or not one round of the value of the state variable is completed without being inverted based on the unupdated counter n. As a method of determining that one round of scan of the state variable is performed, the following two methods are conceivable. According to a first method, it is determined that one round has been completed when all permutations of the indices generated in advance are consumed. According to a second method, it is determined that one round has been completed when the number N of the state variables counted from the middle of the immediately preceding one round has elapsed. Although the flowchart in FIG. 10 illustrates the second method, the first method may be used.

The search processing unit 130 may set the number of the state variables of the change candidates selected at a time to two or more, and may simultaneously change the values of the state variables of the two or more change candidates for one transition determination. The search processing unit 130 may calculate $\Delta E$ in a case where the values of two or more state variables are changed, from the change amount of energy based on Equation (2) for each of the two or more state variables.

For example, a sequence for selecting two state variables may be an order represented by (1, 2), (1, 3), ···, (1, N), (2, 3), (2, 4), ···, (2, N), ···, and (N - 1, N) by using a set of indices. Alternatively, a sequence for selecting the two state variables may be an order represented by $(\Pi_1, \Pi_2)$, $(\Pi_1, \Pi_3)$, ···, and $(\Pi_{N-1}, \Pi_N)$. Here, $\{\Pi_i\}$ is a rearrangement of {1, ···, N}. The search processing unit 130 may change an arrangement order of {1, ···, N} with respect to $\{\Pi_i\}$ at a predetermined timing for each one round or some rounds. In a case where the number of the state variables of the change candidates selected at a time is a (a is an integer of 1 or more), the number of the state variables selected by the replica update unit 140a based on the stochastic key is also a.

The search processing unit 130 may perform a search in which the number of the state variables of the change candidates selected at a time is one, and then perform a search in which the number of the state variables of the change candidates selected at a time is two. The search processing unit 130 may select the state variable to be determined in an order in consideration of a constraint that only one of the state variables belonging to a predetermined group is set to 1. Examples of such constraints include those referred to as 1W1H and 2W1H.

When, for example, two state variables are simultaneously changed in parallel search in which a plurality of state transitions are simultaneously set as transition candidates and one state transition is selected from the plurality of state transitions, the number of combinations of the transition candidates increases to N(N - 1). Therefore, in the parallel search, it is not realistic to perform a search in which two or more state variables are simultaneously changed. By contrast, in a method of sequentially selecting state variables, a search in which two or more state variables are simultaneously changed may be easily performed, and the degree of freedom of the search may be improved.

For obtaining a solution to a problem represented by the energy function, it is considered to sequentially select the state variable as described above and determine whether or not to allow the state transition related to the state variable based on the change amount of energy. According to this method, determination for each of a plurality of state variables is repeatedly performed until a state transition is performed, for example, in such a manner that determination of the next one round is started in a case where one round of the state variables is completed, and any of the state transitions are not allowed. However, as the number of iterations increases while the state transition is not performed, a time taken to obtain a solution increases.

Accordingly, when the number of times it is continuously determined that the value of the state variable is not to be changed reaches a predetermined number of times, the information processing apparatus 100a determines the state variable subjected to a transition by using the stochastic key in accordance with the change amount of energy, and changes a value of the state variable to prompt the state transition. Since the stagnation of the state transition is suppressed in this manner, the information processing apparatus 100a may improve the efficiency of the solution search. As a result, the information processing apparatus 100a may reach a good solution in a short time. For example, it is possible to efficiently search for a good solution even for a problem with a small number of inversion candidates, for example, a combinatorial optimization problem with a large number of states in which energy takes a local minimum value.

Next, a comparative example of the search using the stochastic key will be described. In the comparative example, sampling by a rejection free (RF) method is exemplified. As an example of the RF method, Japanese Laid-open Patent Publication No. 2020-135727 may be used as a reference. According to the comparative example, N stochastic keys corresponding to N state variables are calculated in parallel, and the state variables of which values are to be inverted are selected based on the N stochastic keys. The CPU 101 is exemplified as a processing entity of the comparative example.

FIG. 11 is a flowchart illustrating the comparative example.

(S30) The CPU 101 initializes the search processing. At the initialization, an initial temperature value and a specified number of iterations are set as in step S20.

(S31) The CPU 101 performs reading of indices.

(S32) The CPU 101 performs calculations for the stochastic keys $k_1$, $k_2$, ···, and $k_N$ in parallel. $k_i$ is calculated by, for example, Equation (11). For example, the CPU 101 causes a plurality of search processing units to operate in parallel, and causes each search processing unit to calculate each of the stochastic keys $k_1$, $k_2$, ···, and $k_N$.

(S33) The CPU 101 acquires calculation results of the stochastic keys $k_1$, $k_2$, ···, and $k_N$, and searches for a minimum $k_i$.

(S34) The CPU 101 updates the state variable $x_i$ and the local field $h_i$ (for example, $h_1$, $h_2$, ···, and $h_N$).

(S35) The CPU 101 determines whether or not the value of the state variable has been updated by a specified number of times. When the state variable has been updated by the specified number of times, the processing ends. When the state variable is not updated by the specified number of times, the processing proceeds to step S31.

As in FIG. 10, steps S31 to S35 may be considered to be a procedure for one temperature value in the SA method or the like, and steps S31 to S35 may be considered to be repeatedly executed at each temperature value used in the PT method, annealing, or the like.

According to the comparative example, when a problem to be solved is equal to or less than parallelism in one apparatus, a loop of steps S31 to S35 may be executed at high speed. However, when the problem scale is larger than the parallelism of the apparatus, the following method is used. According to a first method, one apparatus divides all indices into a plurality of portions, executes steps S31 to S33 on each portion in a time division manner, and searches for a minimum value of $k_i$ in all the indices. According to a second method, a certain apparatus distributes a part of indices to a plurality of apparatuses, each apparatus executes steps S31 to S33, and one apparatus integrates acquisition results of $k_i$ obtained by each apparatus and searches for a minimum value of $k_i$ in all the indices.

However, in the first method, the number of iterations of the loop of steps S31 to S35 becomes very large, so that calculation time increases. In the second method, the calculation time increases due to an overhead of communication between the plurality of apparatuses.

By contrast, according to the information processing apparatus 100a, an increase in the calculation time taken during the above-described first and second methods may be suppressed, and a good solution may be reached in a short time even for a relatively large-scale problem.

[Fifth Embodiment]

Next, a fifth embodiment will be described. Items different from the above-described third and fourth embodiments will be mainly discussed below while omitting the explanations of the common items.

FIG. 12 is a diagram illustrating a function example of an information processing apparatus according to the fifth embodiment.

An information processing apparatus 100b is implemented by the same hardware as that of the information processing apparatus 100. As in the information processing apparatus 100, the information processing apparatus 100b includes a replica control unit 170 in addition to the coefficient holding unit 120, the search processing unit 130, and the control unit 190 illustrated in FIG. 4. FIG. 12 illustrates replica update units 140b1, 140b2, ···, and 140bn, and the index generation unit 150 included in the search processing unit 130, and does not illustrate the search processing unit 130 and the control unit 190.

The information processing apparatus 100b is different from that of the third embodiment and the fourth embodiment in that the replica update units 140b1, 140b2, ···, and 140bn are included instead of the replica update units 140 and 140a in the search processing unit 130. n is the number of replica update units, and is an integer of two or more. Each of the replica update units 140b1, 140b2, ···, and 140bn is the same as the replica update unit 140 or the replica update unit 140a. FIG. 12 does not illustrate the random number generation unit 160 that supplies the uniform random number u ($0 < u < 1$) to each of the replica update units 140b1, 140b2, ···, and 140bn.

The information processing apparatus 100b may include a plurality of accelerator cards including the accelerator card 103. In this case, the replica update units 140b1, 140b2, ···, and 140bn, and the index generation unit and the random number generation unit corresponding to each replica update unit 140 may be implemented by the plurality of accelerator cards. The replica control unit 170 may be implemented by causing the CPU 101 to execute the program stored in the RAM 102, or may be implemented by the accelerator card 103.

Each of the replica update units 140b1, 140b2, ···, and 140bn reads, from the coefficient holding unit 120, a weight coefficient corresponding to an index supplied from the index generation unit 150, and performs transition determination according to the index. Each of the replica update units 140b1, 140b2, ···, and 140bn updates energy by changing the value of the state variable and updates the local field in accordance with the result of the transition determination. The index generation unit 150 may input the same indices to all the replica update units 140b1, 140b2, ···, and 140bn, or may input different indices to all or some of the replica update units.

The replica control unit 170 controls the obtaining of a solution by the SA method, the PT method, or the like using the replica update units 140b1, 140b2, ···, and 140bn. The replica control unit 170 controls a change in a temperature value in the SA method, exchange of a temperature value between replicas in the PT method, and the like in each of the replica update units 140b1, 140b2, ···, and 140bn. The replica control unit 170 may also obtain a solution by executing the PA method using the replica update units 140b1, 140b2, ···, and 140bn.

For example, the replica control unit 170 or the control unit 190 may acquire a solution finally obtained by each of the replica update units 140b1, 140b2, ···, and 140bn, select the best solution, for example, a solution having the minimum energy, and provide the selected solution to the user.

As described above, in the information processing apparatus 100b, each of the plurality of replica update units selects a state variable of a change candidate in a predetermined order, performs transition determination on the state variable of the change candidate, and searches for a solution. Each of the plurality of replica update units corrects the change amount of energy used for transition determination with an offset value when the number of times a state transition is continuously rejected reaches a predetermined number, or determines a state variable subjected to a transition based on a stochastic key corresponding to the change amount of energy.

Accordingly, the information processing apparatus 100b may improve the efficiency of the solution search and improve the solution finding performance as in the third and fourth embodiments. Since each of the plurality of replica update units distributes and allocates a range of the indices of the state variables in charge of the transition determination, for example, the information processing apparatus 100b may cope with a relatively large-scale problem having a large number of the state variables.

In the parallel search in which a plurality of state transitions are simultaneously set as transition candidates and one state transition is selected from the plurality of state transitions, $\Delta E_i$ is calculated for all N state variables in the vicinity of the current state. Therefore, the calculation speed decreases in a case of a problem having the parallelism equal to or higher than parallelism possible in hardware. For example, in a case where a 100k bit problem is solved by using a 1k bit parallel apparatus, parallel determination is performed 100 times, and then it is determined which one bit is to be inverted, which takes time.

As exemplified in Japanese Laid-open Patent Publication No. 2020-140631, a method of sequentially inverting values of state variables by parallel search is also considered. However, even with the above-described method, it is difficult to find a good solution in a short time without inversion of the values of the state variables in a problem with a small number of acceptance candidates or a problem with a large number of local minimum values in which $\Delta E_i > 0$ for all i.

Each of the information processing apparatuses 100, 100a, and 100b uses the offset value or the stochastic key to promote the state transition when the stagnation of the state transition is observed in a method of sequentially selecting a transition candidate. Accordingly, it is possible to efficiently search for a good solution even for a relatively large-scale problem with a small number of inversion candidates, for example, a combinatorial optimization problem with a large number of states in which energy takes a local minimum value.

For example, the information processing apparatus 100 according to the third embodiment executes the following processing. The information processing apparatus 100b according to the fifth embodiment may also execute processing similar to that of the information processing apparatus 100. The processing unit 12 according to the first embodiment may also execute the following processing of the replica update unit 140. The information processing apparatus 100 searches for a solution to a problem represented by energy function including a plurality of state variables.

The replica update unit 140 selects a state variable of a change candidate, which is a part of the plurality of state variables, in a predetermined order. The replica update unit 140 determines whether or not to change the value of the state variable of the change candidate based on the change amount of a value of the energy function corresponding to the state variable of the change candidate selected. When it is determined that the value of the state variable of the change candidate is to be changed, the replica update unit 140 changes the value of the state variable of the change candidate. When the number of times it is continuously determined that the value of the state variable of the change candidate is not to be changed reaches a predetermined number of times, the replica update unit 140 corrects, with an offset value, the change amount corresponding to the state variables of the change candidates newly selected. Based on the corrected change amount, the replica update unit 140 determines whether or not to change the value of the state variable of the change candidate.

Accordingly, the information processing apparatus 100 may improve the efficiency of the solution search. For example, even in a case of falling into a local solution in a search by a sequential method (sequential MCMC method), the information processing apparatus 100 may prompt the state transition, and may improve the efficiency of the solution search.

For example, the information processing apparatus 100 executes search processing for searching for a solution of a problem represented by the energy function including the plurality of state variables. The search processing includes selection processing, determination processing, and state change processing. In the selection processing, the replica update unit 140 selects a state variable of a change candidate, which is a part of the plurality of state variables, in a predetermined order. In the determination processing, the replica update unit 140 determines whether or not to change a value of the state variable of the change candidate based on the change amount of a value of the energy function corresponding to a change in the value of the state variable of the change candidate selected in the selection processing. In the state change processing, when it is determined in the determination processing that the value of the state variable of the change candidate is to be changed, the replica update unit 140 changes the value of the state variable of the change candidate. In the search processing, the replica update unit 140 repeatedly executes the selection processing, the determination processing, and the state change processing according to a predetermined order. In the search processing, the replica update unit 140 further executes count processing and correction processing. In the count processing, the replica update unit 140 counts the number of times it is determined that the value of the state variable of the change candidate is not to be continuously changed during the search processing being repeatedly executed. In the correction processing, when the number of times counted in the count processing reaches a predetermined number of times, the replica update unit 140 corrects, with an offset value, the change amount of the energy function corresponding to the change in the value of the state variable of the change candidate newly selected. In the determination processing after the change amount is corrected through the correction processing, the replica update unit 140 determines whether or not to change the value of the state variable of the change candidate newly selected based on the corrected change amount.

Accordingly, the information processing apparatus 100 may improve the efficiency of the solution search. For example, even in a case of falling into a local solution in a search by a sequential method (sequential MCMC method), the information processing apparatus 100 may prompt the state transition, and may improve the efficiency of the solution search.

For example, in the correction of the change amount of the value of the energy function, the replica update unit 140 performs correction of subtracting the offset value from the change amount.

Accordingly, in search for a solution of the problem that minimizes energy, it is possible to increase the probability in which it is determined that the value of the state variable of the change candidate newly selected is to be changed as compared with a case where the correction with the offset value is not performed. In a case of searching for the solution to the problem that maximizes energy, it is conceivable that the replica update unit 140 performs stochastic selection in such a manner that a state transition with a large change amount of energy is prioritized. In this case, in the correction of the change amount of energy, it is also conceivable that the replica update unit 140 prompts the state transition by adding a positive offset value to the change amount.

The replica update unit 140 cancels the correction with the offset value when the value of the state variable of the change candidate is to be changed based on the corrected change amount.

Accordingly, the information processing apparatus 100 may restart appropriate search based on the normal change amount of energy. For example, cancellation of the correction with the offset value corresponds to resetting of the above-described offset value $E_{off}$ to 0.

The replica update unit 140 sets the number of selections demanded for one round of selection of the state variable of the change candidate according to the predetermined order to the predetermined number of times.

Accordingly, for example, even in a case of falling into a local solution in a search by a sequential method, the information processing apparatus 100 may prompt the state transition, and may improve the efficiency of the solution search. The number of selections demanded for one round of selection is the number of selections of the state variables of the change candidates demanded for selecting the state variables of all the change candidates from the plurality of state variables in a predetermined order. The number of selections demanded for one round of selection corresponds to the number Z of times of determination of one round described above.

By comparing the change amount of energy with the random number value, the replica update unit 140 stochastically determines whether or not to change the value of the state variable of the change candidate. By correcting the change amount of energy with the offset value, the replica update unit 140 increases a probability of determining to change the value of the state variable of the change candidate as compared with a case where the correction with the offset value is not performed.

Accordingly, even in a case of falling into a local solution in a search by a sequential method, the information processing apparatus 100 may prompt the state transition, and may improve the efficiency of the solution search.

For example, while the number of times it is determined that the value of the state variable of the change candidate is not to be continuously changed reaches a predetermined number of times, the replica update unit 140 sets a minimum value of the change amount obtained with respect to each of the state variables of the change candidates to the offset value.

Accordingly, the information processing apparatus 100 may obtain an optimum offset value.

For example, the replica update unit 140 sets a probability of determining to change the value of the state variable of the change candidate corresponding to the above-described minimum value to 1 by performing the correction of subtracting the offset value from the change amount of energy.

Accordingly, the information processing apparatus 100 may determine to change the value of the state variable of the change candidate corresponding to at least the above-described minimum value, and may reliably cause the state transition.

The replica update unit 140 sets the number of the state variables of the change candidates selected with respect to one determination whether or not to change the value of the state variable of the change candidate to one or more.

Accordingly, the information processing apparatus 100 may improve the degree of freedom of search, and may increase the possibility of further improving the efficiency of the solution search in accordance with the problem.

For example, the information processing apparatus 100a according to the fourth embodiment executes the following processing. The information processing apparatus 100b according to the fifth embodiment may also execute processing similar to that of the information processing apparatus 100a. The processing unit 22 according to the second embodiment may also execute the following processing of the replica update unit 140a. The information processing apparatus 100a searches for a solution to a problem represented by an energy function including a plurality of state variables.

The replica update unit 140a selects a state variable of a change candidate, which is a part of the plurality of state variables, in a predetermined order. The replica update unit 140a determines whether or not to change a value of the state variable of the change candidate based on the change amount of a value of the energy function corresponding to the state variable of the change candidate selected. When it is determined that the value of the state variable of the change candidate is to be changed, the replica update unit 140a changes the value of the state variable of the change candidate. When the number of times it is continuously determined that the value of the state variable of the change candidate is not to be changed reaches a predetermined number of times, the replica update unit 140a selects a first state variable from the plurality of state variables based on the stochastic key value calculated in accordance with the change amount and the random number value, and changes the value of the first state variable.

Accordingly, the information processing apparatus 100a may improve the efficiency of the solution search. For example, even in a case of falling into a local solution in a search by a sequential method, the information processing apparatus 100a may prompt the state transition, and may improve the efficiency of the solution search.

For example, the information processing apparatus 100a executes search processing for searching for a solution of a problem represented by the energy function including the plurality of state variables. The search processing includes selection processing, determination processing, and state change processing. In the selection processing, the replica update unit 140a selects a state variable of a change candidate, which is a part of the plurality of state variables, in a predetermined order. In the determination processing, the replica update unit 140a determines whether or not to change a value of the state variable of the change candidate based on the change amount of a value of the energy function corresponding to a change in the value of the state variable of the change candidate selected in the selection processing. In the state change processing, when it is determined in the determination processing that the value of the state variable of the change candidate is to be changed, the replica update unit 140a changes the value of the state variable of the change candidate. In the search processing, the replica update unit 140a repeatedly executes the selection processing, the determination processing, and the state change processing according to a predetermined order. The replica update unit 140a executes count processing for counting the number of times it is determined that the value of the state variable of the change candidate is not to be continuously changed during the search processing being repeatedly executed. When the number of times counted in the count processing reaches a predetermined number of times, the replica update unit 140a selects a first state variable from the plurality of state variables based on the stochastic key value calculated in accordance with the change amount and the random number value, and changes the value of the first state variable.

Accordingly, the information processing apparatus 100a may improve the efficiency of the solution search. For example, even in a case of falling into a local solution in a search by a sequential method, the information processing apparatus 100a may prompt the state transition, and may improve the efficiency of the solution search.

While the number of times it is determined that the value of the state variable of the change candidate is not to be continuously changed reaches a predetermined number of times, the replica update unit 140a calculates a stochastic key value corresponding to the change amount obtained with respect to each of the state variables of the change candidates and the random number value. The replica update unit 140a sets a state variable of a change candidate corresponding to the minimum value or the maximum value among the calculated stochastic key value as a first state variable.

Accordingly, the information processing apparatus 100a may appropriately obtain the first state variable. As a random number value used for calculation of a certain stochastic key value, the replica update unit 140a may use a random number value generated at a timing when the corresponding stochastic key value is calculated.

The replica update unit 140a calculates a stochastic key value based on the change amount of energy, the random number value, and the temperature value used for searching for a solution.

Accordingly, the information processing apparatus 100a may select the first state variable in accordance with an appropriate criterion (for example, the Metropolis criterion or the like).

The replica update unit 140a sets the number of selections demanded for one round of selection of the state variable of the change candidate according to the predetermined order to the predetermined number of times.

Accordingly, even in a case of falling into a local solution in a search by a sequential method, the information processing apparatus 100a may prompt the state transition, and may improve the efficiency of the solution search. The number of selections demanded for one round of selection is the number of selections of the state variables of the change candidates demanded for selecting the state variables of all the change candidates from the plurality of state variables in a predetermined order. The number of selections demanded for one round of selection corresponds to the number Z of times of determination of one round described above.

The replica update unit 140a sets the number of the state variables of the change candidates selected with respect to one determination whether or not to change the value of the state variable of the change candidate to one or more.

Accordingly, the information processing apparatus 100a may improve the degree of freedom of search, and may increase the possibility of further improving the efficiency of the solution search in accordance with the problem.

The information processing according to the first embodiment may be implemented by causing the processing unit 12 to execute a program. The information processing according to the second embodiment may be implemented by causing the processing unit 22 to execute a program. The information processing of the third to fifth embodiments may be realized by causing the CPU 101 to execute a program. Each of the information processing apparatuses 10, 20, 100, 100a, and 100b may be implemented by a computer. The program may be recorded in the computer-readable recording medium 53.

For example, the program is circulated by distributing the recording medium 53 in which the program is recorded. The program may be stored in another computer and the program may be distributed via a network. For example, the computer may store (install), in a storage device such as the RAM 102 or the HDD 104, the programs recorded in the recording medium 53 or programs received from another computer, and may read the programs from the storage device to execute the programs.

## Claims

1. A program in which a computer executes performs processing of:

    executing search processing that repeatedly execute selection processing, determination processing, and state change processing according to the predetermined order for searching for a solution to a problem represented by an energy function including a plurality of state variables, wherein
    the selection processing includes selecting a state variable of a change candidate, which is a part of the plurality of state variables, in a predetermined order,
    the determination processing includes determining whether or not to change a value of the state variable of the change candidate based on a change amount of a value of the energy function corresponding to a change in the value of the state variable of the change candidate selected in the selection processing, and
    the state change processing includes changing the value of the state variable of the change candidate when it is determined in the determination processing that the value of the state variable of the change candidate is to be changed, wherein
    the search processing further includes:

        counting processing that incudes counting a number of times it is determined that the value of the state variable of the change candidate is not to be continuously changed in the search processing repeatedly executed, and
        correction processing that includes correcting, with an offset value, the change amount of the energy function corresponding to the change in the value of the state variable of the change candidate newly selected when the number of times counted in the count processing reaches a predetermined number of times, wherein
        the determination processing includes determining, after the change amount is corrected through the correction processing, whether or not to change the value of the state variable of the change candidate newly selected based on the corrected change amount is performed.

2. The non-transitory computer-readable storage medium according to claim 1,
    wherein the correction processing includes correcting the change amount by subtracting the offset value from the change amount.

3. The non-transitory computer-readable storage medium according to claim 1, wherein the processing further includes canceling the correcting with the offset value when the value of the state variable of the change candidate is changed based on the corrected change amount.

4. The non-transitory computer-readable storage medium according to claim 1, wherein the processing further includes setting a number of selections demanded for one round of selection of the state variable of the change candidate according to the predetermined order to the predetermined number of times.

5. The non-transitory computer-readable storage medium according to claim 1, wherein the processing further includes increasing a probability of determining to change the value of the state variable of the change candidate by correcting the change amount with the offset value.

6. The non-transitory computer-readable storage medium according to claim 1, wherein the processing further includes:

setting a minimum value of the change amount obtained with respect to each of the state variables of the change candidates while the number of times reaches the predetermined number of times to the offset value; and
setting a probability of determining to change the value of the state variable of the change candidate corresponding to the minimum value to 1 by subtracting the offset value from the change amount.

7. The non-transitory computer-readable storage medium according to claim 1, wherein the processing further includes setting a number of the state variables of the change candidates selected with respect to one determination whether or not to change the value of the state variable of the change candidate to one or more.

8. An information processing apparatus comprising:

a memory; and
a processor coupled to the memory and configured to execute search processing that repeatedly execute selection processing, determination processing, and state change processing according to the predetermined order for searching for a solution to a problem represented by an energy function including a plurality of state variables, wherein
the selection processing includes selecting a state variable of a change candidate, which is a part of the plurality of state variables, in a predetermined order,
the determination processing includes determining whether or not to change a value of the state variable of the change candidate based on a change amount of a value of the energy function corresponding to a change in the value of the state variable of the change candidate selected in the selection processing, and
the state change processing includes changing the value of the state variable of the change candidate when it is determined in the determination processing that the value of the state variable of the change candidate is to be changed, wherein
the search processing further includes:

counting processing that incudes counting a number of times it is determined that the value of the state variable of the change candidate is not to be continuously changed in the search processing repeatedly executed, and
correction processing that includes correcting, with an offset value, the change amount of the energy function corresponding to the change in the value of the state variable of the change candidate newly selected when the number of times counted in the count processing reaches a predetermined number of times, wherein
the determination processing includes determining, after the change amount is corrected through the correction processing, whether or not to change the value of the state variable of the change candidate newly selected based on the corrected change amount is performed.

9. A program in which a computer executes performs processing of:

executing search processing that repeatedly execute selection processing, determination processing, and state change processing according to the predetermined order for searching for a solution to a problem represented by an energy function including a plurality of state variables, wherein
the selection processing includes selecting a state variable of a change candidate, which is a part of the plurality of state variables, in a predetermined order,
the determination processing includes determining whether or not to change a value of the state variable of the change candidate based on a change amount of a value of the energy function corresponding to a change in the value of the state variable of the change candidate selected in the selection processing, and
the state change processing includes changing the value of the state variable of the change candidate when it is determined in the determination processing that the value of the state variable of the change candidate is to be changed,
the search processing further includes:

counting processing that incudes counting a number of times it is determined that the value of the state variable of the change candidate is not to be continuously changed in the search processing repeatedly executed,
selecting a first state variable from the plurality of state variables based on a stochastic key that is calculated according to the change amount and random number value when the number of times counted in the count processing reaches a predetermined number of times, and
changing a value of the selected first value.

**10.** The program according to claim 9, wherein the processing further includes:

calculating the stochastic key according to the change amount and random number value, the change amount being obtained for each the state variable of the change candidate; wherein
the selecting includes selecting the state variable of the change candidate corresponding to a maximum value or minimum value of the calculated stochastic key as the first state variable.

**11.** The program according to claim 9, wherein the processing further includes calculating the stochastic key according to the change amount, random number value, and a temperature value that is used by searching the solution.

**12.** The program according to claim 9, wherein the processing further includes setting a number of selections demanded for one round of selection of the state variable of the change candidate according to the predetermined order to the predetermined number of times.

**13.** The program according to claim 9, wherein the processing further includes setting a number of state variables of the change candidate to one or more.

FIG. 1

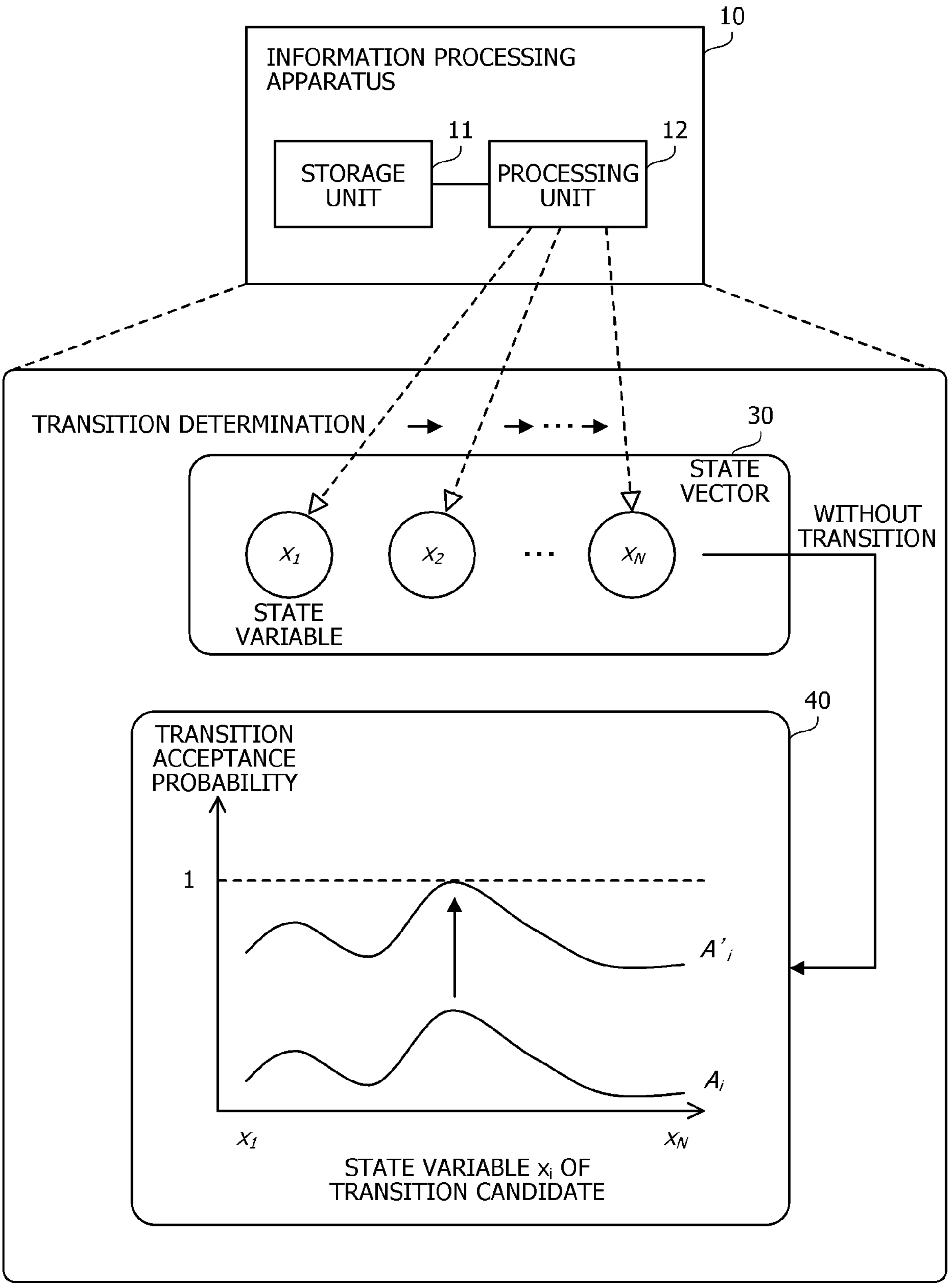
10
INFORMATION PROCESSING APPARATUS
11
12
STORAGE UNIT
PROCESSING UNIT
TRANSITION DETERMINATION
30
STATE VECTOR
WITHOUT TRANSITION
$x_1$
$x_2$
$x_N$
STATE VARIABLE
40
TRANSITION ACCEPTANCE PROBABILITY
1
$A'_i$
$A_i$
$x_1$
$x_N$
STATE VARIABLE $x_i$ OF TRANSITION CANDIDATE

FIG. 2

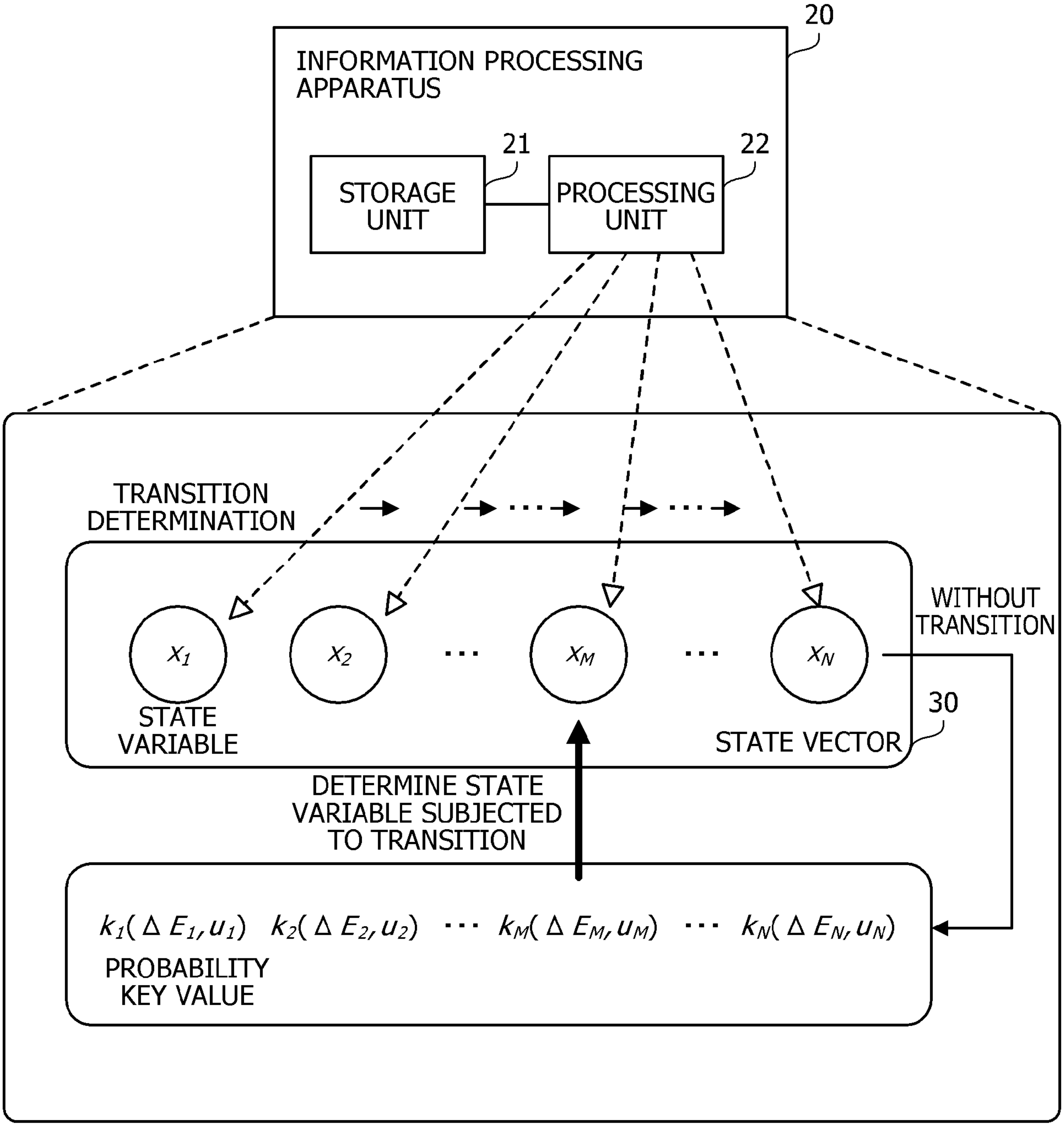
20
INFORMATION PROCESSING APPARATUS
21
STORAGE UNIT
22
PROCESSING UNIT
TRANSITION DETERMINATION
WITHOUT TRANSITION
$x_1$
$x_2$
$x_M$
$x_N$
STATE VARIABLE
30
STATE VECTOR
DETERMINE STATE VARIABLE SUBJECTED TO TRANSITION
$k_1(\Delta E_1, u_1)$ $k_2(\Delta E_2, u_2)$ ··· $k_M(\Delta E_M, u_M)$ ··· $k_N(\Delta E_N, u_N)$
PROBABILITY KEY VALUE

FIG. 3

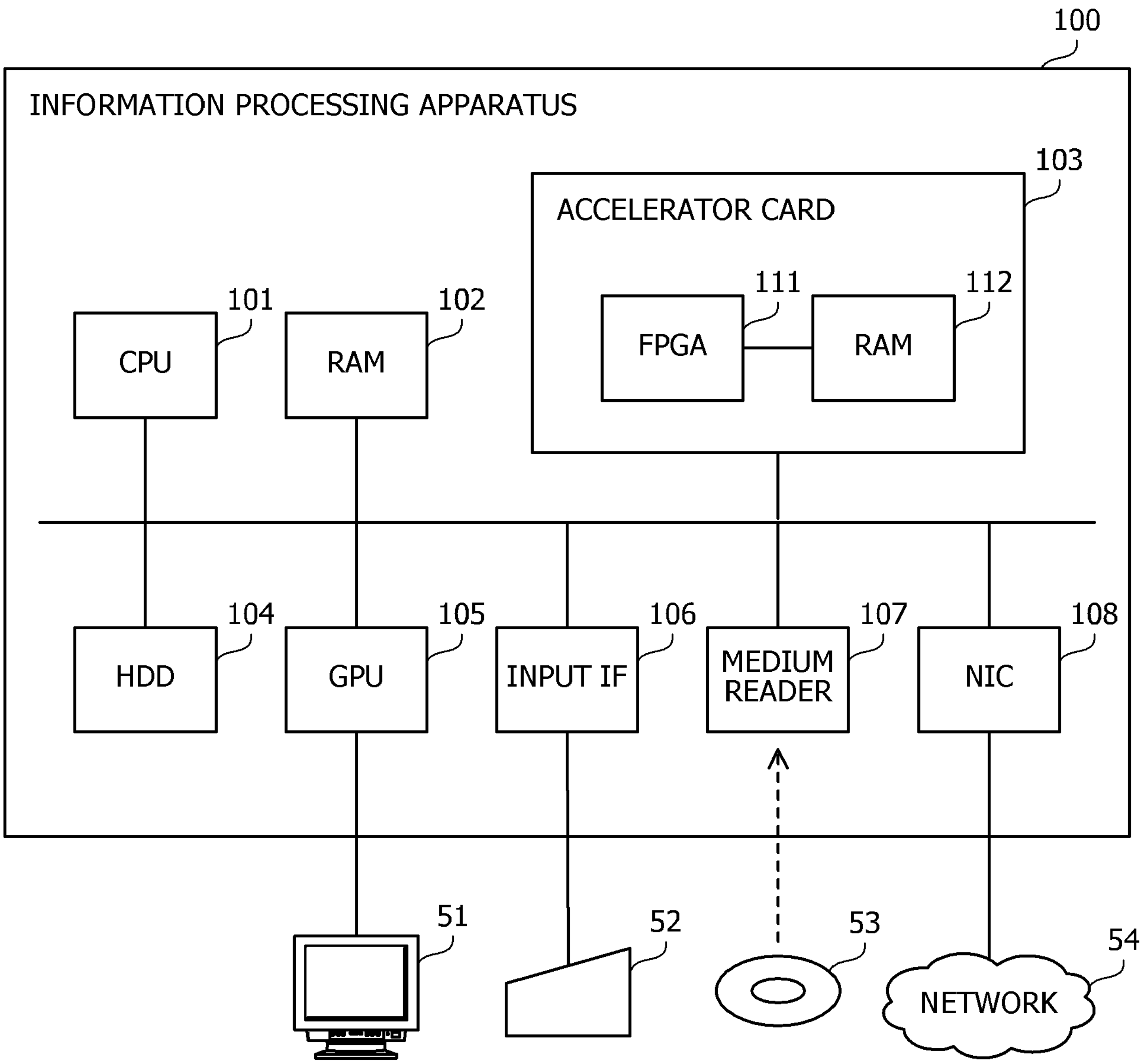
100
INFORMATION PROCESSING APPARATUS
103
ACCELERATOR CARD
111
112
FPGA
RAM
101
102
CPU
RAM
104
105
106
107
108
HDD
GPU
INPUT IF
MEDIUM READER
NIC
51
52
53
54
NETWORK

FIG. 4

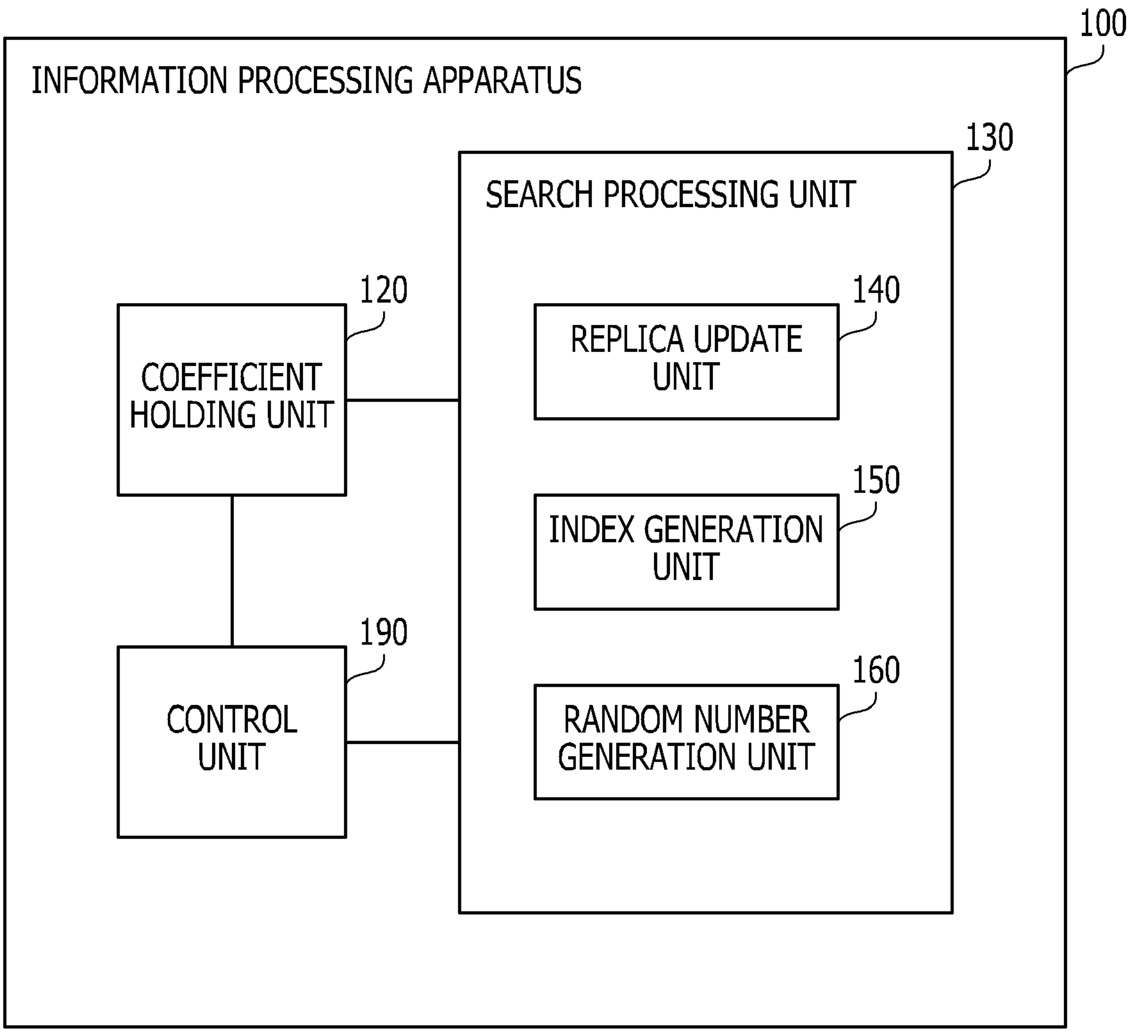
100
INFORMATION PROCESSING APPARATUS
130
SEARCH PROCESSING UNIT
120
COEFFICIENT HOLDING UNIT
140
REPLICA UPDATE UNIT
150
INDEX GENERATION UNIT
190
CONTROL UNIT
160
RANDOM NUMBER GENERATION UNIT

FIG. 5

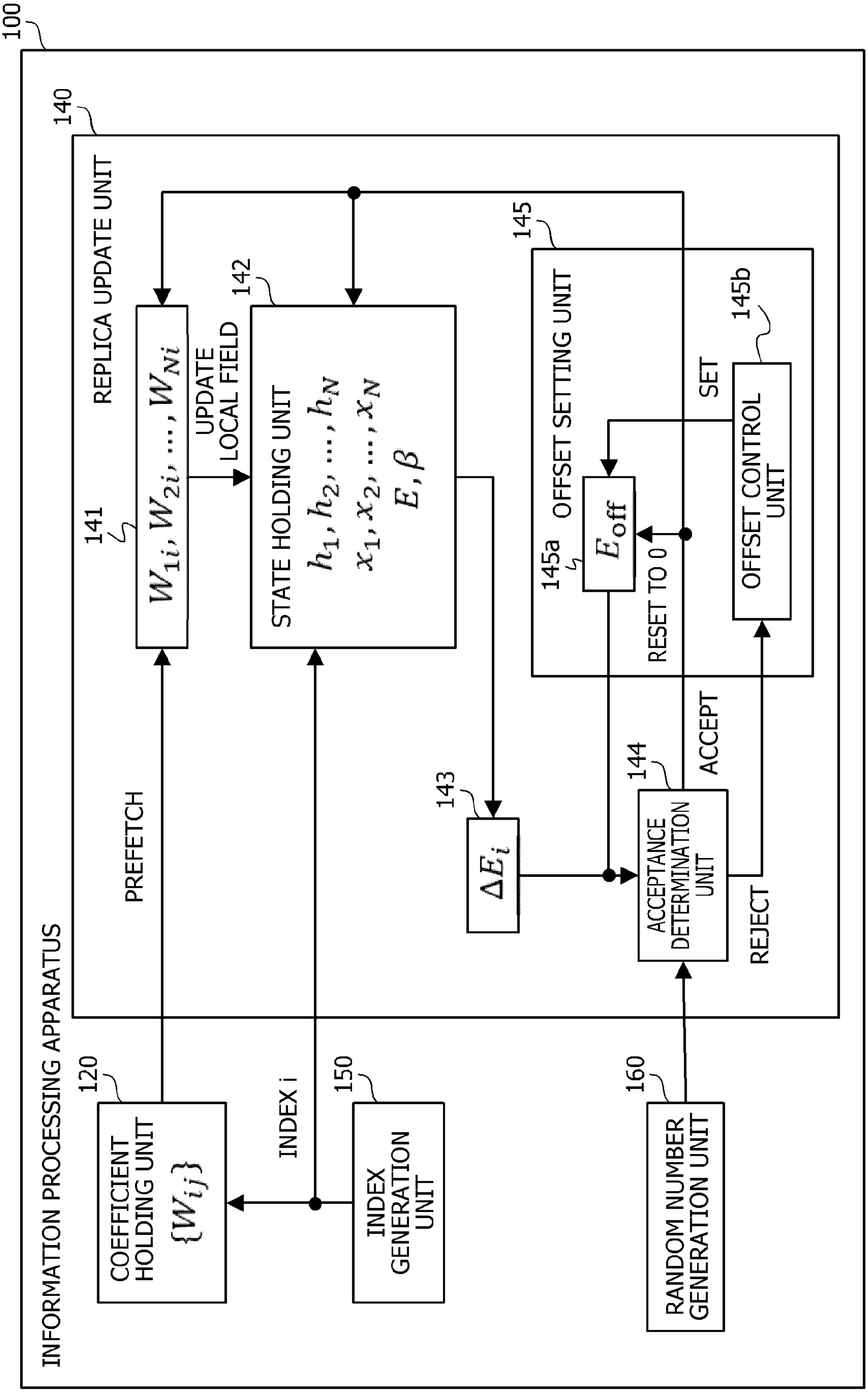
100
INFORMATION PROCESSING APPARATUS
140
REPLICA UPDATE UNIT
141
$W_{1i}, W_{2i}, \ldots, W_{Ni}$
UPDATE LOCAL FIELD
142
STATE HOLDING UNIT
$h_1, h_2, \ldots, h_N$
$x_1, x_2, \ldots, x_N$
$E, \beta$
145
OFFSET SETTING UNIT
145a
$E_{\mathrm{off}}$
145b
OFFSET CONTROL UNIT
SET
RESET TO 0
ACCEPT
REJECT
143
$\Delta E_i$
144
ACCEPTANCE DETERMINATION UNIT
PREFETCH
INDEX i
120
COEFFICIENT HOLDING UNIT
$\{W_{ij}\}$
150
INDEX GENERATION UNIT
160
RANDOM NUMBER GENERATION UNIT

FIG. 6

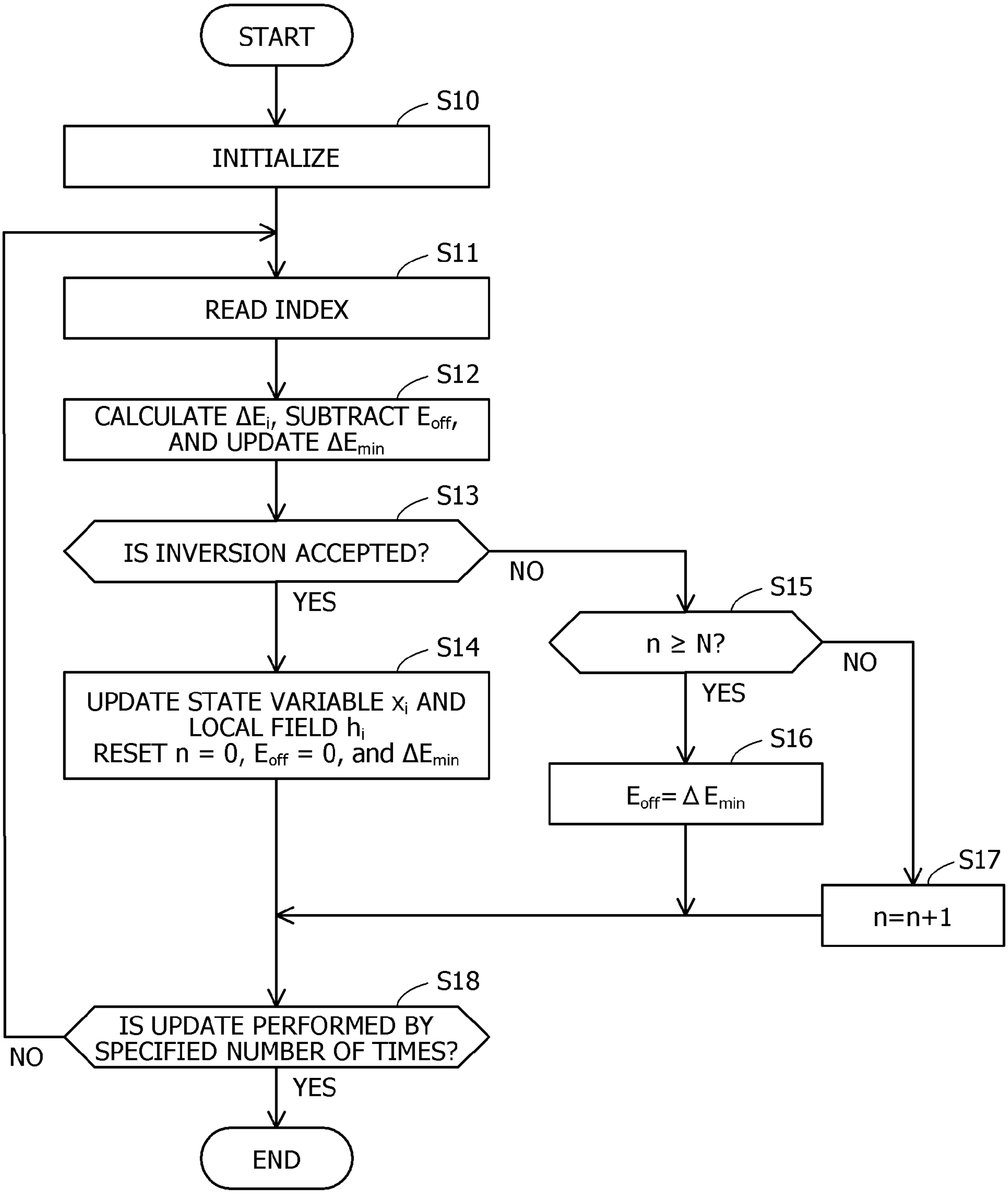
START
S10
INITIALIZE
S11
READ INDEX
S12
CALCULATE $\Delta E_i$, SUBTRACT $E_{off}$, AND UPDATE $\Delta E_{min}$
S13
IS INVERSION ACCEPTED?
NO
YES
S14
UPDATE STATE VARIABLE $x_i$ AND LOCAL FIELD $h_i$
RESET n = 0, $E_{off}$ = 0, and $\Delta E_{min}$
S15
n ≥ N?
NO
YES
S16
$E_{off} = \Delta E_{min}$
S17
n=n+1
S18
IS UPDATE PERFORMED BY SPECIFIED NUMBER OF TIMES?
NO
YES
END

FIG. 7

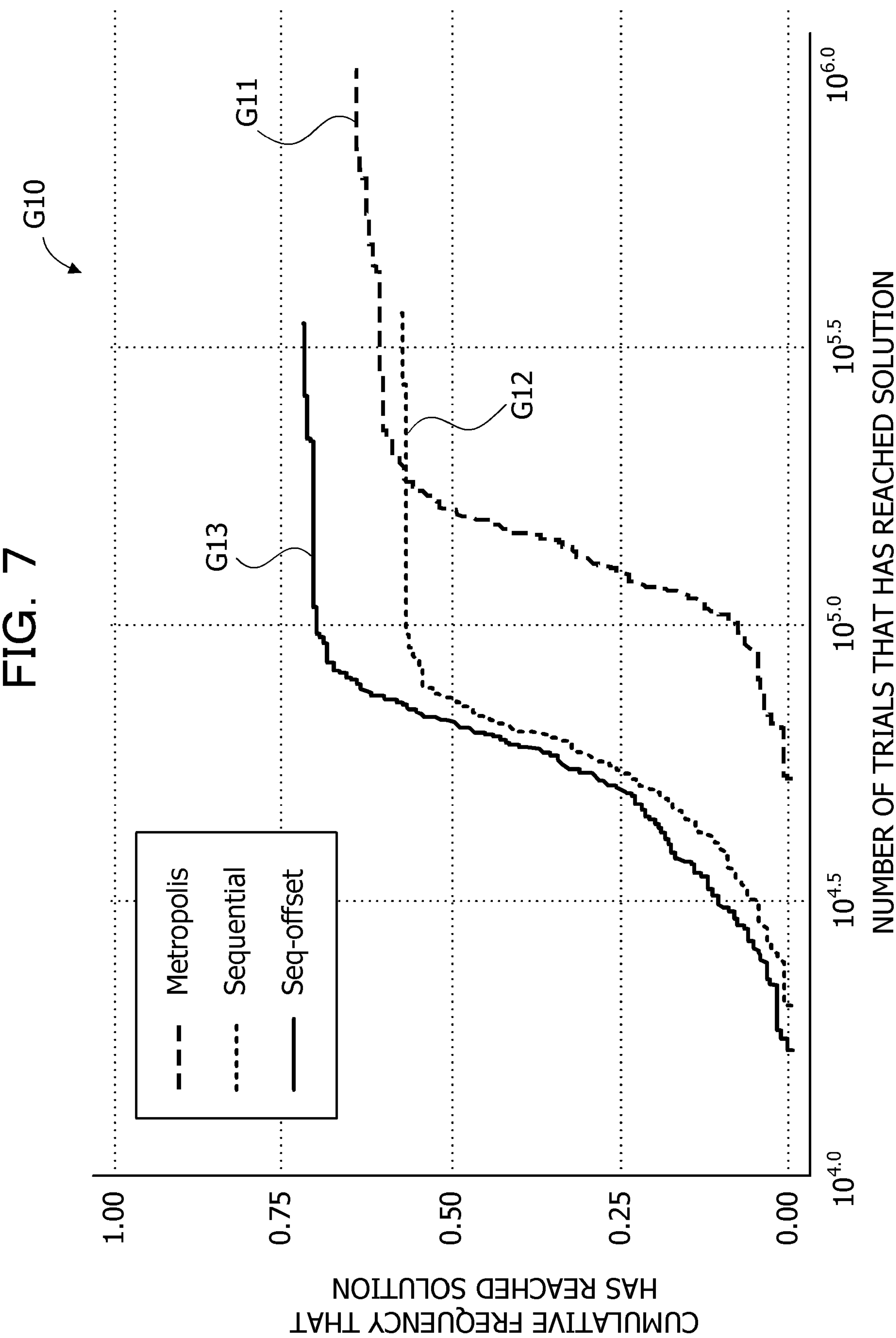
G10
G11
G12
G13
Metropolis
Sequential
Seq-offset
CUMULATIVE FREQUENCY THAT HAS REACHED SOLUTION
1.00
0.75
0.50
0.25
0.00
$10^{4.0}$
$10^{4.5}$
$10^{5.0}$
$10^{5.5}$
$10^{6.0}$
NUMBER OF TRIALS THAT HAS REACHED SOLUTION

FIG. 8

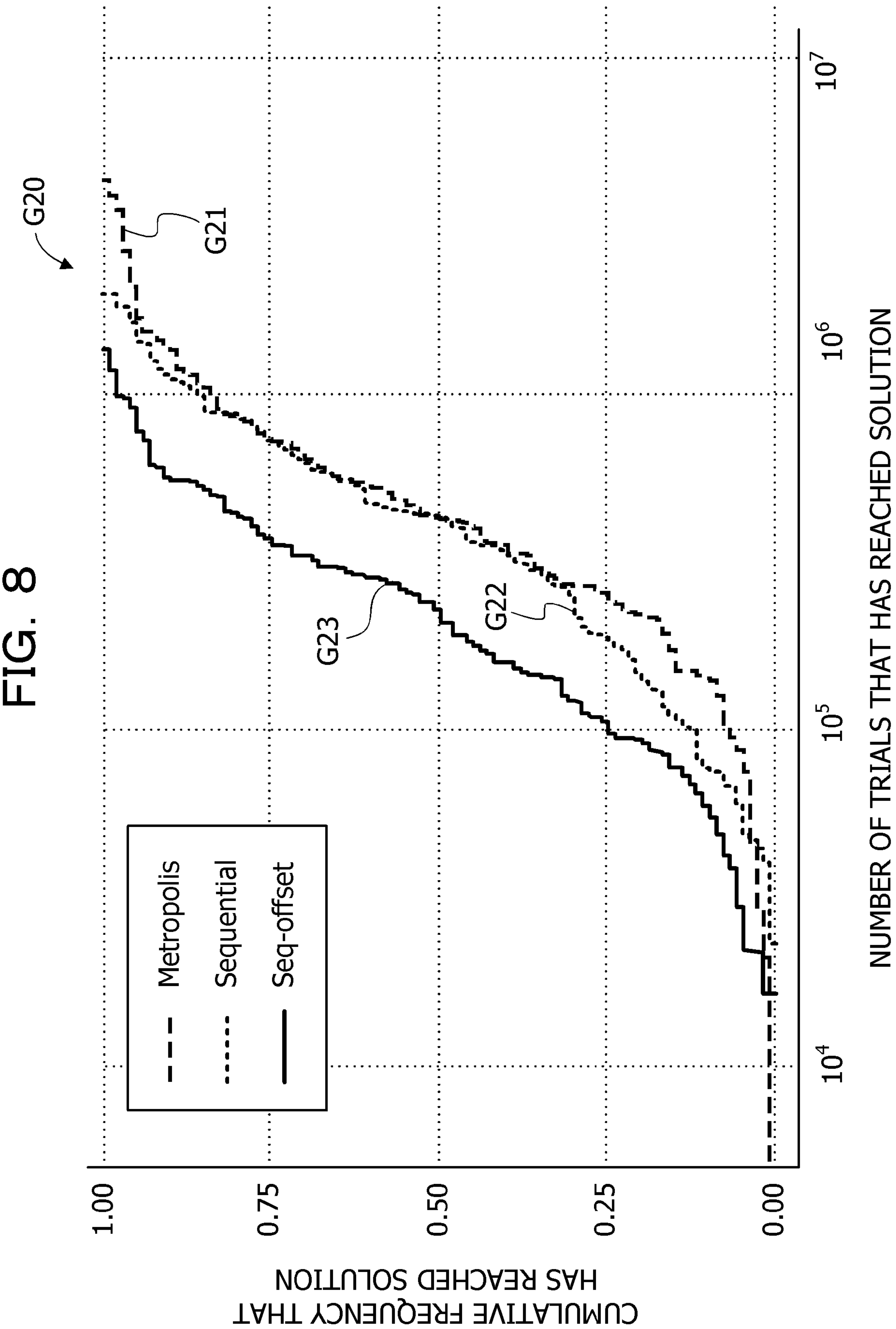
G20
G21
G22
G23
Metropolis
Sequential
Seq-offset
1.00
0.75
0.50
0.25
0.00
$10^4$
$10^5$
$10^6$
$10^7$
NUMBER OF TRIALS THAT HAS REACHED SOLUTION
CUMULATIVE FREQUENCY THAT HAS REACHED SOLUTION

FIG. 9

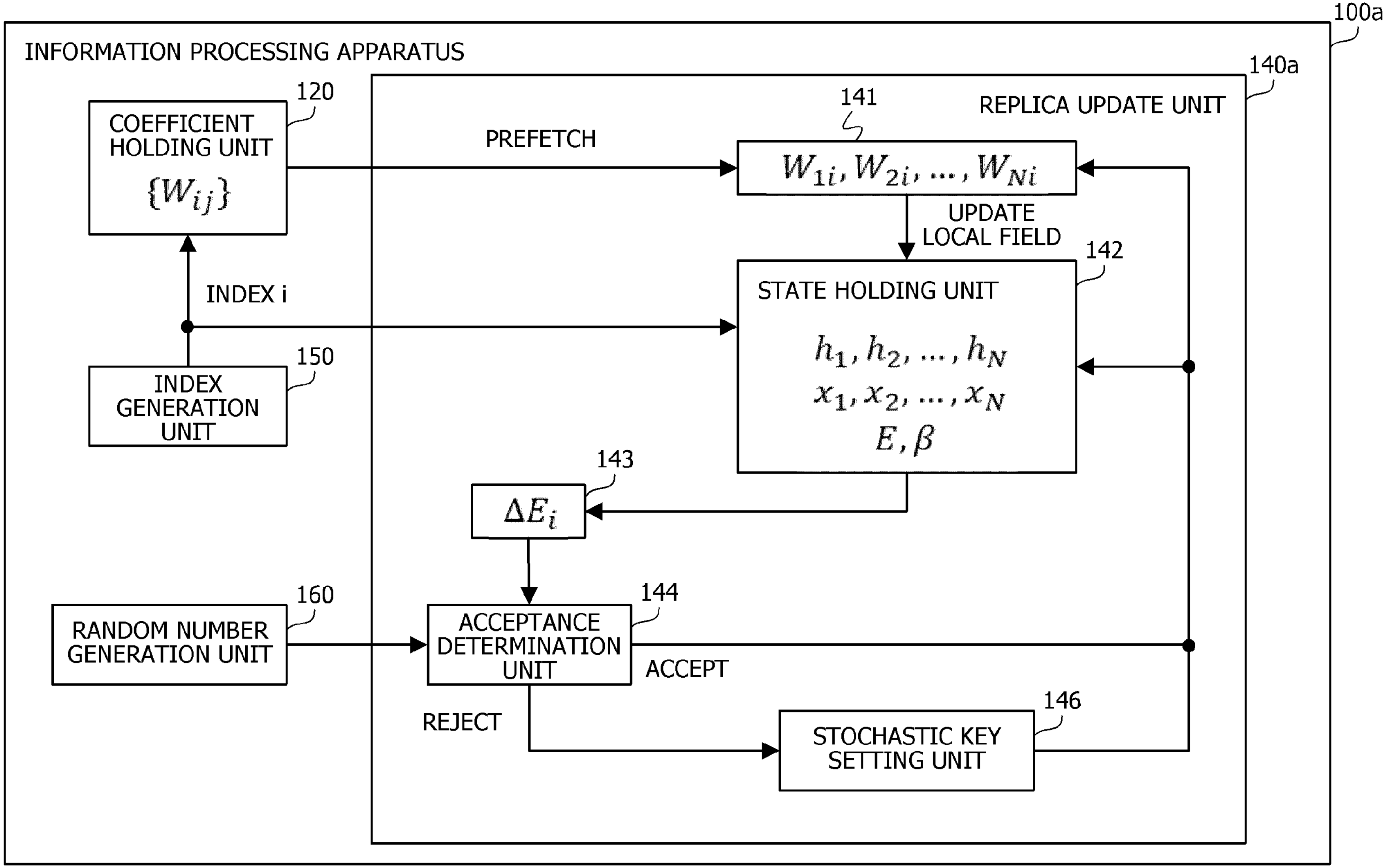
100a
INFORMATION PROCESSING APPARATUS
140a
REPLICA UPDATE UNIT
120
COEFFICIENT HOLDING UNIT
$\{W_{ij}\}$
PREFETCH
141
$W_{1i}, W_{2i}, \ldots, W_{Ni}$
UPDATE LOCAL FIELD
142
STATE HOLDING UNIT
$h_1, h_2, \ldots, h_N$
$x_1, x_2, \ldots, x_N$
$E, \beta$
INDEX i
150
INDEX GENERATION UNIT
143
$\Delta E_i$
160
RANDOM NUMBER GENERATION UNIT
144
ACCEPTANCE DETERMINATION UNIT
ACCEPT
REJECT
146
STOCHASTIC KEY SETTING UNIT

FIG. 10

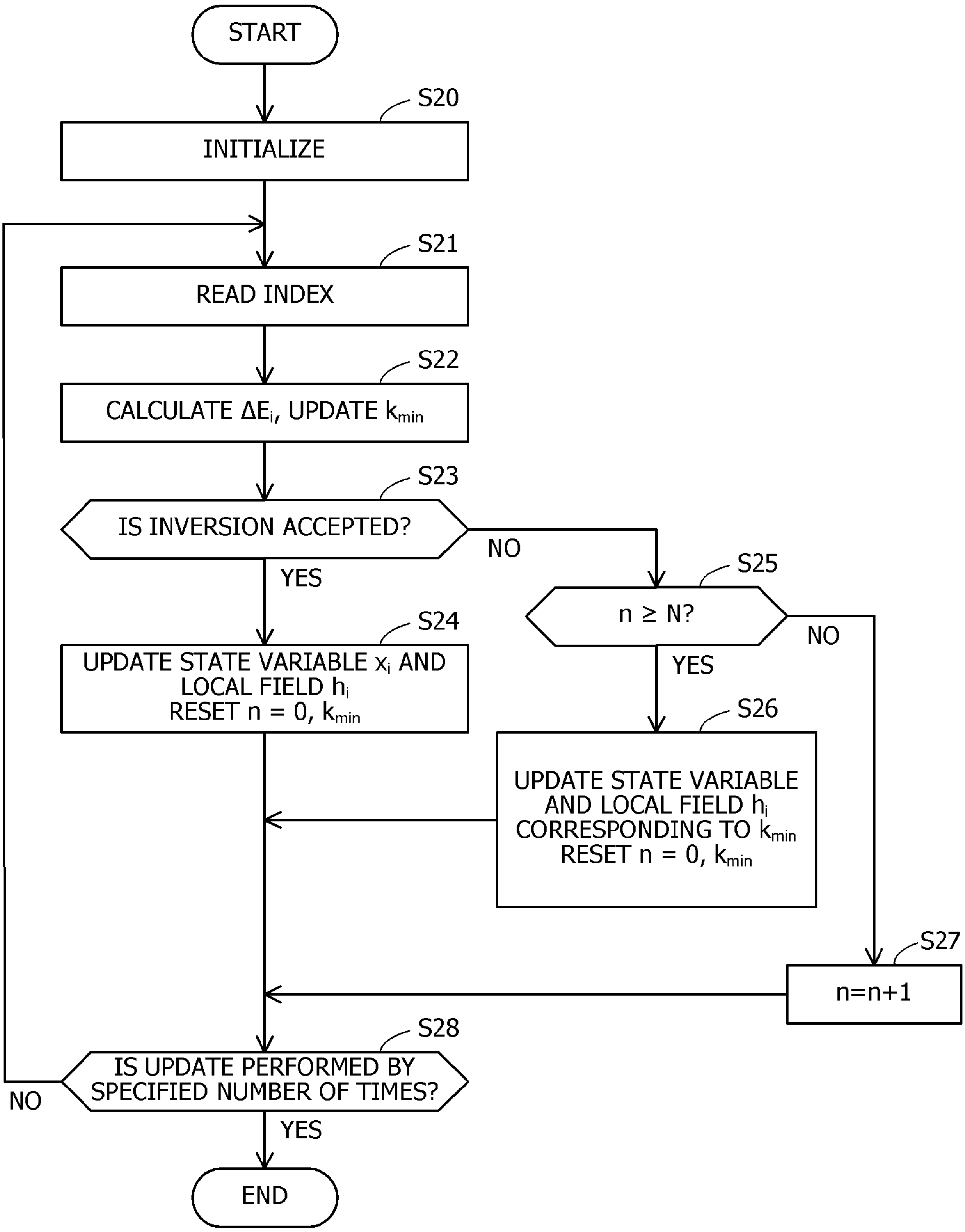
START
S20
INITIALIZE
S21
READ INDEX
S22
CALCULATE ΔE$_i$, UPDATE k$_{min}$
S23
IS INVERSION ACCEPTED?
NO
YES
S25
n ≥ N?
NO
YES
S24
UPDATE STATE VARIABLE x$_i$ AND LOCAL FIELD h$_i$
RESET n = 0, k$_{min}$
S26
UPDATE STATE VARIABLE AND LOCAL FIELD h$_i$ CORRESPONDING TO k$_{min}$
RESET n = 0, k$_{min}$
S27
n=n+1
S28
IS UPDATE PERFORMED BY SPECIFIED NUMBER OF TIMES?
NO
YES
END

FIG. 11

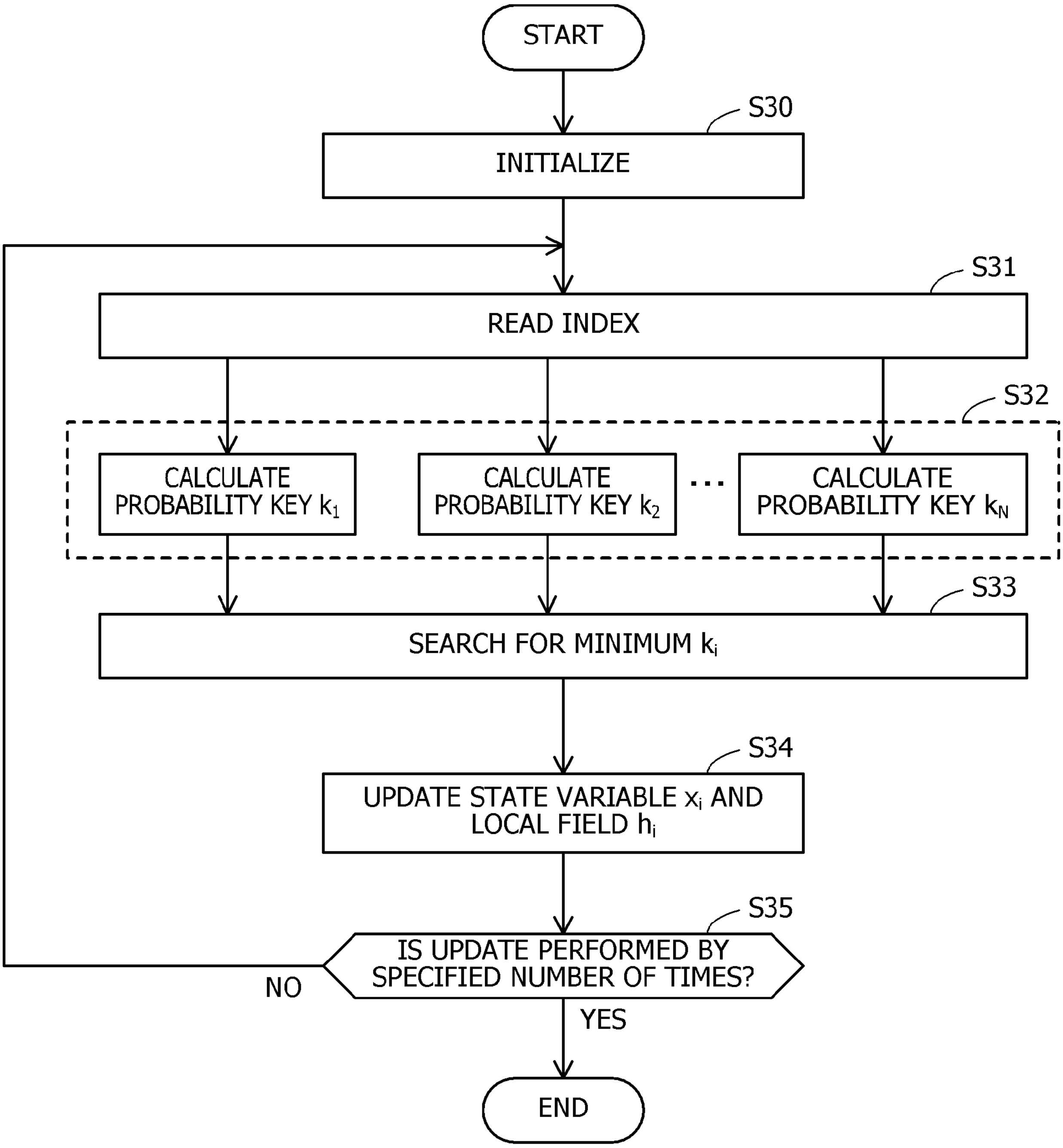
START
S30
INITIALIZE
S31
READ INDEX
S32
CALCULATE PROBABILITY KEY $k_1$
CALCULATE PROBABILITY KEY $k_2$
...
CALCULATE PROBABILITY KEY $k_N$
S33
SEARCH FOR MINIMUM $k_i$
S34
UPDATE STATE VARIABLE $x_i$ AND LOCAL FIELD $h_i$
S35
IS UPDATE PERFORMED BY SPECIFIED NUMBER OF TIMES?
NO
YES
END

FIG. 12

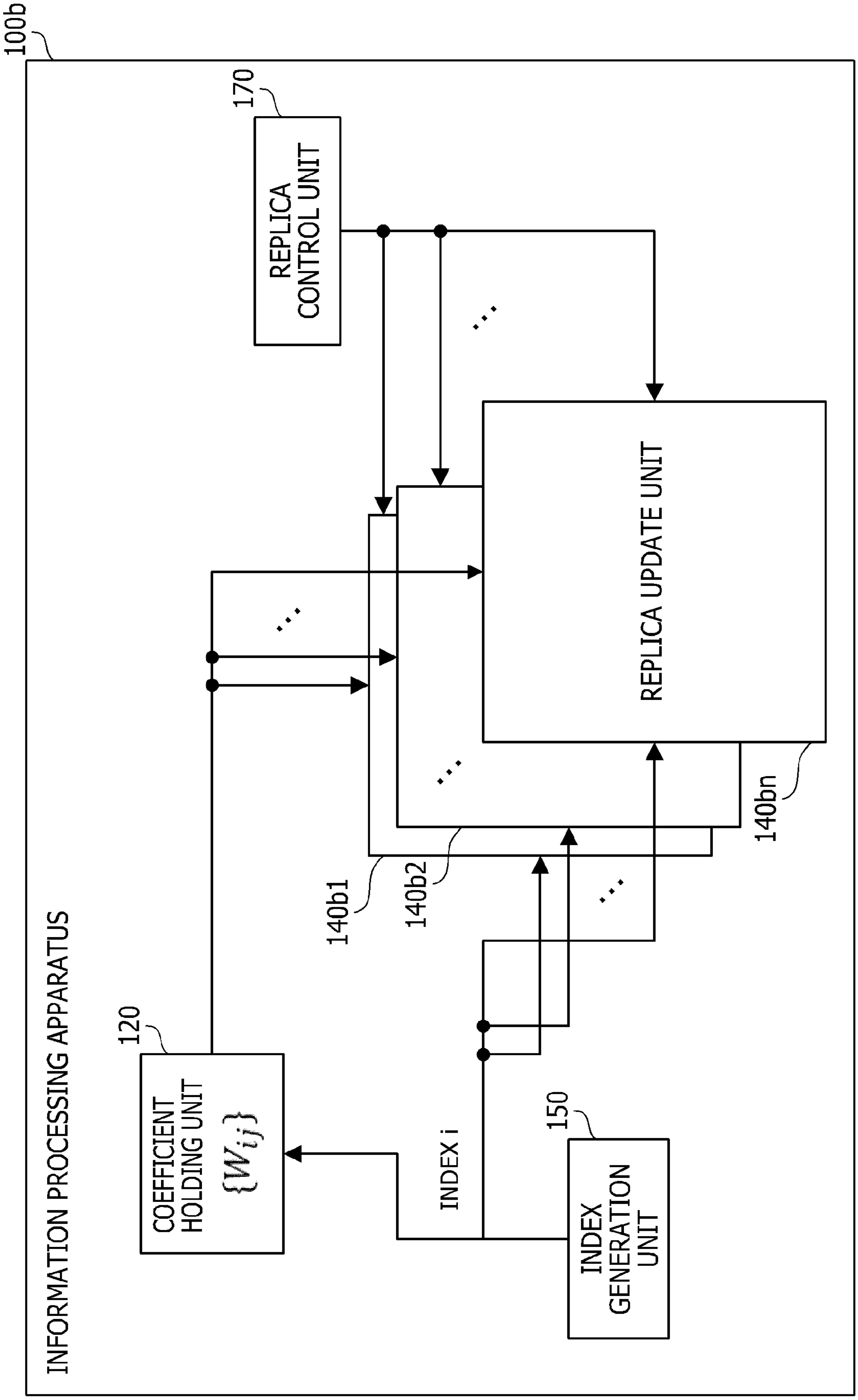
100b
INFORMATION PROCESSING APPARATUS
170
REPLICA CONTROL UNIT
REPLICA UPDATE UNIT
140b1
140b2
140bn
120
COEFFICIENT HOLDING UNIT
$\{W_{ij}\}$
INDEX i
150
INDEX GENERATION UNIT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020135727 A
- US 20140279816
- JP 2019125155 A
- JP 2020140631 A

### Non-patent literature cited in the description

- **REN et al.** Acceleration of Markov chain Monte Carlo simulations through sequential updating. *J. Chem. Phys.,* 2006, vol. 124 (6), 064109
- **MANOUSIOUTHAKIS et al.** Strict Detailed Balance is Unnecessary in Monte Carlo Simulation. *J. Chem. Phys.,* 1999, vol. 110 (6), 2753-2756